(19) Europäisches Patentamt / European Patent Office / Office européen des brevets

(11) **EP 4 553 720 A1**

(12) **EUROPEAN PATENT APPLICATION**

(43) Date of publication:
**14.05.2025 Bulletin 2025/20**

(21) Application number: **24203008.8**

(22) Date of filing: **26.09.2024**

(51) International Patent Classification (IPC):
*G06N 10/70* $^{(2022.01)}$

(52) Cooperative Patent Classification (CPC):
**G06N 10/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.11.2023 US 202363596702 P**

(71) Applicant: QEDMA Quantum Computing LTD
**6902068 Tel Aviv (IL)**

(72) Inventors:
• **COHEN, Itsik**
  **St. Ramat Gan (IL)**
• **KOTLER, Shlomi**
  **9190401 Jerusalem (IL)**
• **LINDNER, Netanel Hanan**
  **3783500 Aviel (IL)**
• **BERMAN, Adiel Reuvan Meyer**
  **6250710 Tel Aviv (IL)**
• **BAIREY, Eyal**
  **Tel Aviv (IL)**
• **LEVIATAN, Eyal**
  **Tel Aviv (IL)**
• **OVDAT, Omrie**
  **4281500 Pardesia (IL)**
• **GURWICH, Ilya**
  **Ramat-Gan (IL)**
• **MELCER, Ron**
  **Givataayim (IL)**
• **ITKIN, Yaron**
  **Tel Aviv (IL)**
• **GOLAN, Omri**
  **Rehovot (IL)**

(74) Representative: **Lavoix**
  **Bayerstraße 83**
  **80335 München (DE)**

(54) **METHODS AND SYSTEMS FOR CHARACTERIZATION AND CALIBRATION OF A QUANTUM PROCESSOR**

(57)    A computer implemented method, for characterizing at least one target error parameter of implementation errors. The implementation errors are in a quantum logic operation $g$ acting on a targeted set of qubits of a quantum processor. The method includes generating at least one characterization sequence $S$. The at least one characterization sequence $S$ is configured for amplifying the at least one target error parameter. The at least one characterization sequence $S$ comprises at least one refocusing sequence. The at least one refocusing sequence is configured so that the at least one characterization sequence reduces predefined generator terms. The predefined generator terms include crosstalk between the targeted set of qubits and another set of qubits of the quantum processor. The method includes characterizing the at least one target error parameter, using the at least one characterization sequence in a characterization protocol.

EP 4 553 720 A1

**Description**

TECHNOLOGICAL FIELD

The present disclosure relates to the field of quantum computing, specifically to the field of quantum processor characterization.

**BACKGROUND**

The development of useful quantum computers relies crucially on the reduction of implementation errors - differences between the actual and ideal implementations of quantum logic operations. The long-term strategy for dealing with such errors is quantum error correction, which, however, requires very low error rates to begin with, as well as an excessive overhead in the number of qubits, relative to existing hardware. Complementary strategies, suited for dealing with errors in small circuits on existing hardware, are collectively termed quantum error suppression and mitigation. Yet, the first stage of reducing implementation errors is basically the calibration of quantum logic operations (gates). The improvement of hardware to meet the conditions for error correction, together with the majority of error suppression and mitigation and calibration protocols, require a detailed and high-resolution characterization of implementation errors. Though the characterization of implementation errors in single qubits or qubit pairs is common practice, it is widely understood as computationally intractable for more than just a few qubits - unless various simplifying and often un-realistic assumptions are made. This state of affairs prevents the detailed and high-resolution characterization of state-of-the-art quantum processors, currently numbering tens to hundreds of qubits.

**GENERAL DESCRIPTION**

Characterization protocols known in the art have a deficiency of inability to select a desired set of error parameters to characterize, causing inefficiency in the required run time. For example, in characterization protocols that use error amplification to characterize errors, when a gate is repeated to amplify a desired error parameter, additional error parameters are amplified as well. This leads to systematic errors in the characterization, unless these additional parameters are characterized as well. Characterizing the additional parameters leads to intractable time requirement in the presence of crosstalk. Thus, characterization protocols known in the art also have a deficiency of inability to account for crosstalk between qubits. leading to systematic errors in the characterization.

The present disclosure provides a characterization protocol, wherein a desired set of error parameters to characterize can be selected. Furthermore, a characterization protocol as disclosed herein accounts for crosstalk between qubits, thereby reducing the systematic errors in the characterization.

In accordance with a first aspect of the presently disclosed subject matter, there is provided a computer implemented method, for characterizing at least one target error parameter of implementation errors. The implementation errors are in a quantum logic operation $g$ acting on a targeted set of qubits of a quantum processor. The method includes generating at least one characterization sequence $S$. The at least one characterization sequence $S$ is configured for amplifying the at least one target error parameter. The at least one characterization sequence $S$ comprises at least one refocusing sequence. The at least one refocusing sequence is configured so that the at least one characterization sequence reduces predefined generator terms. The predefined generator terms include crosstalk between the targeted set of qubits and another set of qubits of the quantum processor. The method includes characterizing the at least one target error parameter, using the at least one characterization sequence in a characterization protocol.

According to some embodiments, characterizing the at least one target error parameter includes applying the at least one characterization sequence $S$ to the quantum processor. Characterizing the at least one target error parameter includes measuring the targeted set of qubits using a measurement apparatus of said quantum processor, thereby obtaining a set of measurement values. Characterizing the at least one target error parameter includes computing a value of the at least one target error parameter, by fitting a model to the set of measurement values.

In addition to the above features, a computer implemented method for characterizing at least one target error parameter, according to this aspect of the presently disclosed subject matter, can optionally comprise one or more of features (i) to (xxxvii) below, in any technically possible combination or permutation:

    i. the at least one characterization sequence $S$ is configured for reducing predefined coherent error generator terms in the targeted set of qubits.

    ii. the at least one refocusing sequence is a dynamical decoupling sequence.

    iii. the at least one refocusing sequence is a twirling sequence.

    iv. the at least one target error parameter is a Pauli generator term $P_t$.

    v. the at least one characterization sequence $S$ is configured to eliminate predefined Pauli generator terms of the implementation errors distinct from the at least one target error parameter.

vi. the method characterizes a single target error parameter of implementation errors in the quantum logic operation *g*.

vii. the at least one characterization sequence *S* is configured to reduce a magnitude measure of the crosstalk.

viii. the at least one characterization sequence *S* is configured to eliminate at least a first-order error of implementation errors distinct from the at least one target error parameter.

ix. the at least one characterization sequence *S* is configured for characterizing dissipation implementation errors. The dissipation implementation errors being any one of Markovian dissipation implementation errors, and non-Markovian dissipation implementation errors.

x. recompiling the at least one characterization sequence *S*.

xi. the at least one characterization sequence *S* includes at least one germ.

xii. the at least one germ is a recursively concatenated germ.

xiii. the at least one refocusing sequences includes a set of refocusing sequences. The at least one characterization sequence *S* includes a recursively concatenated germ obtained by computing a predefined number *n* of concatenations $G_{k+1} = \prod_m G_k \beta_m^{(k)}$, wherein *k* = 0,1, ..., *n* - 1. $\beta_m^{(k)}$ are refocusing sequences of the set of refocusing sequences. $G_0 = g$, *g* being said quantum logic operation.

xiv. the at least one characterization sequence *S* includes at least one fiducial operation.

xv. the at least one fiducial operation includes state preparation operations configured for setting a state of the set of qubits to a preparation Pauli state $P_p$. The at least one fiducial operation includes measuring the set of qubits according to a measurement Pauli $P_m$.

xvi. the preparation Pauli state $P_p$, measurement Pauli $P_m$, and the Pauli generator term $P_t$ span an algebra isomorphic to the *SU*(2) Lie algebra.

xvii. the preparation Pauli state $P_p$ and measurement Pauli $P_m$ are configured for increasing a sensitivity of the least one characterization sequence *S* to the at least one error parameter.

xviii. the at least one fiducial operation includes a gate layer.

xix. the at least one refocusing sequence commutes with the Pauli generator term $P_t$.

xx. the quantum logic operation *g* is a single-qubit operation.

xxi. the quantum logic operation *g* is a two-qubit operation, and a KAK decomposition of the quantum logic operation *g* includes any of one generator, two generators, and three generators.

xxii. the quantum logic operation *g* is a two-qubit operation. The Pauli generator term $P_t$ anti-commutes with at least one generator of a KAK decomposition of an ideal version of said quantum logic operation *g*. A sum of coefficients is greater than $\frac{3\pi}{4}$, the coefficients corresponding to the at least one KAK generator anti-commuting with said Pauli generator term $P_t$. The at least one refocusing sequence includes at least one secondary refocusing sequence. The at least one secondary refocusing sequence commuting with all commutators of the Pauli generator term $P_t$ and generators of the KAK decomposition of an ideal version of the quantum logic operation *g*.

xxiii. the Pauli generator term $P_t$ is distinct from an over-rotation term. The recursively concatenated germ includes at least *n* concatenation steps. The at least one characterization sequence *S* is configured to eliminate a fraction of 1 - $2^{-n}$ of Pauli generator terms of the implementation errors.

xxiv. the Pauli generator term $P_t$ is distinct from an over-rotation term. A primary refocusing sequence anti-commutes with a corresponding Pauli generator term of an ideal version of the quantum logic operation *g*.

xxv. the Pauli generator term $P_t$ is an over-rotation term. The recursively concatenated germ includes at least *n* concatenation steps. The at least one characterization sequence *S* is configured to eliminate a fraction of 1 - $2^{-(n+1)}$ of Pauli generator terms of the implementation errors.

xxvi. the at least one characterization sequence *S* is configured to isolate the Pauli generator term $P_t$ of the implementation errors.

xxvii. the at least one characterization sequence *S* includes any of the germs $G_0^{(1)} = gA$, and $G_1^{(1)} = B G_0^{(1)} C G_0^{(1)}$. The *A, B, C* being refocusing sequences.

xxviii. the at least one characterization sequence *S* includes any of the germs $G_0^{(2)} = gAgA$, and $G_1^{(2)} = B G_0^{(2)} C G_0^{(2)}$. The *A, B, C* being refocusing sequences.

xxix. the at least one characterization sequence S includes any of the germs $G_0^{(3)} =$ $gAgA$,

$$G_1^{(3)} = G_0^{(3)}AG_0^{(3)}A, \quad G_2^{(3)} = BG_1^{(3)}CG_1^{(3)}$$ , and $$G_3^{(3)} = G_1^{(3)}BG_1^{(3)}C$$ . The A, B, C being refocusing sequences.

xxx. the at least one characterization sequence $S$ includes refocusing sequences randomly sampled for each application of the at least one characterization sequence $S$.

xxxi. the Pauli generator term $P_t$ is distinct from an over-rotation term. The at least one characterization sequence $S$ includes at least one subsequence $G^{(4)} = PgDgDP$. $P$ being a randomly sampled Pauli operator. $D$ being a refocusing sequence commuting with the Pauli generator term $P_t$, and anti-commuting with a corresponding Pauli generator term of an ideal version of the quantum logic operation $g$.

xxxii. the Pauli generator term $P_t$ is an over-rotation term. The at least one characterization sequence $S$ includes at least one subsequence $G^{(5)} = PgP$. $P$ being a randomly sampled Pauli operator, commuting with the Pauli generator term $P_t$.

xxxiii. the method is applied to at least two quantum logic operations in parallel.

xxxiv. the at least two quantum logic operations operate on corresponding subsets of qubits, the corresponding subsets of qubits have no common qubit.

xxxv. no crosstalk is present between each of said corresponding subsets of qubits.

xxxvi. each of the corresponding subsets of qubits is included in a corresponding hyperedge of an interaction hypergraph. Each of the corresponding hyperedges being unique for each of the corresponding subsets of qubits.

xxxvii. the quantum logic operation $g$ is a gate layer or the at least one refocusing sequence includes a gate layer.

In accordance with a second aspect of the presently disclosed subject matter, there is provided a computer implemented method, for characterizing a quantum processor. The quantum processor includes a plurality of quantum logic operations. The method includes applying a method according to the first aspect of the presently disclosed subject matter, to at least one quantum logic operation that is included in the plurality of quantum logic operations of the quantum processor.

According to some embodiments, the quantum processor is described in terms of qudits in place of qubits.

In accordance with a third aspect of the presently disclosed subject matter, there is provided a non-transient computer-readable storage-medium storing computer instructions, wherein the computer instructions are used for causing a computer to execute the method according to the first or second aspects of the presently disclosed subject matter.

In accordance with a fourth aspect of the presently disclosed subject matter, there is provided a computer program product, comprising a computer program, wherein the computer program, when executed by a computer, implements the method according to the first or second aspects of the presently disclosed subject matter.

In accordance with a fifth aspect of the presently disclosed subject matter, there is provided a system comprising a computer and a quantum processor. The computer having gate-level or pulse-level access to the quantum processor. The system being configured to perform the method according to the first or second aspects of the presently disclosed subject matter.

In accordance with a sixth aspect of the presently disclosed subject matter, there is provided a system for characterizing implementation errors in a quantum logic operation $g$. The quantum logic operation $g$ operates on a targeted set of qubits of a quantum processor. The system includes a processor configured for executing computer-executable components stored in a memory. The computer-executable components include a sequence component. The sequence component is configured for generating at least one characterization sequence. The at least one characterization sequence includes at least one refocusing sequence and the quantum logic operation $g$. The at least one characterization sequence is configured for amplifying at least one target error parameter. The at least one refocusing sequence is configured for reducing predefined crosstalk Pauli terms. The crosstalk is between the targeted set of qubits and another set of qubits of the quantum processor. The system includes a characterization component, configured for characterizing errors in the quantum logic operation $g$, using said sequence.

In addition to the above features, a system for characterizing implementation errors, according to this aspect of the presently disclosed subject matter, can optionally comprise one or more of features (i) to (vii) below, in any technically possible combination or permutation:

i. the at least one characterization sequence is configured for reducing predefined Pauli generator terms in the targeted set of qubits.

ii. the at least one refocusing sequence is a dynamical decoupling sequence.

iii. the at least one refocusing sequence is a twirling sequence.

iv. the at least one target error parameter is a Pauli generator term $P_t$.

v. the at least one refocusing sequence commutes with said Pauli generator term $P_t$.

vi. a first refocusing sequence included in the at least one characterization sequence anti-commutes with a Pauli generator term of an ideal version of the quantum logic operation $g$ corresponding to the Pauli generator term $P_t$.

vii. the at least one refocusing sequence is configured to cut the link (eliminate crosstalk) between a targeted subset of qubits and its neighbors.

In accordance with a seventh aspect of the presently disclosed subject matter, there is provided a quantum circuit for use in characterizing implementation errors in a quantum logic operation $g$. The quantum logic operation $g$ acts on a set of qubits. The quantum circuit includes the quantum logic operation $g$ and at least one refocusing sequence. The quantum circuit is configured for amplifying at least one target error parameter. The at least one refocusing sequence is configured for reducing predefined terms of a crosstalk between the set of qubits and a set of spectator qubits of the quantum processor.

In addition to the above features, a quantum circuit for use in for characterizing implementation errors, according to this aspect of the presently disclosed subject matter, can optionally comprise one or more of features (i) to (x) below, in any technically possible combination or permutation:

i. the at least one characterization sequence is configured for reducing predefined generator terms in the targeted set of qubits.

ii. the at least one refocusing sequence is a dynamical decoupling sequence.

iii. the at least one refocusing sequence is a twirling sequence.

iv. the at least one target error parameter is a Pauli generator term $P_t$.

v. the Pauli generator term $P_t$ is not an over-rotation Pauli generator term. The quantum circuit includes any of the germs $G_0^{(1)} = gAgA,\ G_1^{(1)} = G_0^{(1)}AG_0^{(1)}A$, $G_2^{(1)} = BG_1^{(1)}CG_1^{(1)}$, and $G_3^{(1)} = G_1^{(1)}BG_1^{(1)}C$. The $A, B, C$ being refocusing sequences.

vi. the Pauli generator term $P_t$ is an over-rotation Pauli generator term. The quantum circuit comprises any of the germs $G_0^{(2)} = gA,\ G_1^{(2)} = gAgA,\ G_2^{(2)} = BG_1^{(2)}CG_1^{(2)}$, $G_3^{(2)} = BG_1^{(2)}CG_1^{(2)}$. The $A, B, C$ being refocusing sequences.

vii. including at least one recursively concatenated germ.

viii. the at least one refocusing sequences includes a set of refocusing sequences. The recursively concatenated germ is defined by a predefined number n of concatenations $G_{k+1} = \prod_m G_k \beta_m^{(k)}$, wherein $k = 0, 1, \dots, n - 1$ and $G_0 = g$. The $\beta_m^{(k)}$ are refocusing sequences included in the set of refocusing sequences.

ix. the Pauli generator term $P_t$ is not an over-rotation Pauli generator term. The quantum circuit includes at least one subsequence $G^{(3)} = PgDgDP$. $P$ being a randomly sampled Pauli operator commuting with the Pauli term $P_t$. $D$ being a refocusing sequence commuting with the Pauli generator term $P_t$, and anti-commuting with a corresponding Pauli generator term of an ideal version of the quantum logic operation $g$.

x. the Pauli generator term $P_t$ is an over-rotation Pauli generator term. The quantum circuit includes at least one subsequence $G^{(4)} = PgP$. $P$ being a randomly sampled Pauli operator commuting with said Pauli term $P_t$.

In accordance with an eighth aspect of the presently disclosed subject matter, there is provided a computer implemented method for calibrating a quantum logic operation $g$. The quantum logic operation $g$ acts on a targeted set of qubits of a quantum processor. The method includes obtaining at least one characterization value of the quantum logic operation $g$, by characterizing the quantum logic operation $g$. Characterizing the quantum logic operation $g$ is performed using a method according to the first aspect of the presently disclosed subject matter. The method includes configuring the quantum logic operation $g$ for performing a predefined action on the targeted set of qubits. Configuring the quantum logic operation $g$ is performed by adjusting at least one pulse parameter of the quantum logic operation $g$, according to the at least one characterization value.

According to some embodiments, adjusting the at least one pulse parameter includes adjusting at least one of a pulse shape, a pulse amplitude, and a frequency spectrum.

According to some embodiments, configuring the quantum logic operation $g$ includes correcting at least one implementation error in the quantum logic operation $g$.

In the present disclosure, the following terms and their derivatives may be understood according to the below explanations:

The term "operator" may refer to a mapping from a state-vector to a state-vector.

The term "super-operator" may refer to a mapping from a density-operator to a density-operator.

The terms "gate" and "quantum operation" may be synonyms.

The phrase "term", when relating to generators of quantum logic operations or implementation errors, may refer to an element of a generator or to a summand in a series expansion. For example, a matrix element in a matrix representation, a summand in a perturbation expansion, or a Pauli matrix in an expansion according to Pauli matrices.

The term "Pauli term" may refer to a matrix included in the Pauli group $\mathcal{P}$ . The Pauli group is defined as the subgroup of the unitary group that includes tensor-products of the Pauli matrices, with possible multiplication by integral powers of the imaginary unit. In formula: $\mathcal{P}_n = \{\pm 1, \pm i\} \times [\hat{I}, \hat{\sigma}_x, \hat{\sigma}_y, \hat{\sigma}_z]^{\otimes n}$. The number of qubits may be implicit, and the subscript may be omitted. A Pauli term may be used for representing both operators and super-operators.

The term "Pauli gate" may refer to any quantum gate that is represented by a matrix included in the Pauli group $\mathcal{P}$ .

The symbol $\otimes$ may denote the Kronecker-product.

Transposition operation may be denoted by a superscript T, e.g., $H^T$.

## BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:

Fig. 1 illustrates a set of qubits interacting with another set of qubits.

Fig. 2 shows a flowchart illustrating a broad aspect of a method according to embodiments of the present disclosure.

Fig. 3A-3B illustrate features of refocusing sequences and characterization sequences according to embodiments of the present disclosure.

Fig. 4-5 illustrate properties of fiducial operations according to embodiments of the present disclosure.

Fig. 6 illustrates a recursively concatenated germ.

Fig. 7 illustrates features of recursively concatenated germs according to embodiments of the present disclosure.

Fig. 8 illustrates features of twirling subsequences according to embodiments of the present disclosure.

Fig. 9 illustrates properties of quantum logic operations and refocusing sequences according to embodiments of the present disclosure.

Fig. 10A-10C illustrate partitions of qubits according to embodiments of the present disclosure.

Fig. 11A-11C illustrate partitions of qubits according to other embodiments of the present disclosure.

Fig. 12 illustrates a flowchart diagram of a method according to embodiments of the present disclosure.

Fig. 13A-13B show graphs illustrating model-fitting in a method according to embodiments of the present disclosure.

Fig. 14 show graphs demonstrating the performance of a method for characterizing errors in a quantum processor, according to embodiments of the present disclosure, in comparison to methods for characterizing errors in a quantum processor, known in the art.

Fig. 15 schematically illustrates a computer implementing a method according to embodiments of the present disclosure.

Fig. 16 schematically illustrates a system implementing a method according to embodiments of the present disclosure.

## DETAILED DESCRIPTION OF EMBODIMENTS

Described herein are some examples of systems and methods useful for mitigating errors in quantum logic operations.

In the following detailed description, numerous specific details are set forth in order to provide a thorough understanding of the subject matter. However, it will be understood by those skilled in the art that some examples of the subject matter may be practiced without these specific details. In other instances, well-known methods, procedures and components have not been described in detail so as not to obscure the description.

As used herein, the phrases "for example," "such as", "for instance" and variants thereof describe non-limiting examples of the subject matter.

Reference in the specification to "one example", "some examples", "another example", "other examples, "one instance", "some instances", "another instance", "other instances", "one case", "some cases", "another case", "other cases" or variants thereof means that a particular described feature, structure or characteristic is included in at least one example of the subject matter, but the appearance of the same term does not necessarily refer to the same example.

It should be appreciated that certain features, structures and/or characteristics disclosed herein, which are, for clarity, described in the context of separate examples, may also be provided in combination in a single example. Conversely, various features, structures and/or characteristics disclosed herein, which are, for brevity, described in the context of a single example, may also be provided separately or in any suitable subcombination.

Unless specifically stated otherwise, as apparent from the following discussions, it is appreciated that throughout the specification discussions utilizing terms such as "computing", "determining", "running", "implementing", "using", "performing", or the like, may refer to the action(s) and/or process(es) of any combination of software, hardware and/or firmware. For example, these terms may refer in some cases to the action(s) and/or process(es) of a programmable machine, that manipulates and/or transforms data represented as physical, such as electronic quantities, within the programmable machine's registers and/or memories into other data similarly represented as physical quantities within the programmable machine's memories, registers and/or other such information storage, transmission and/or display element(s).

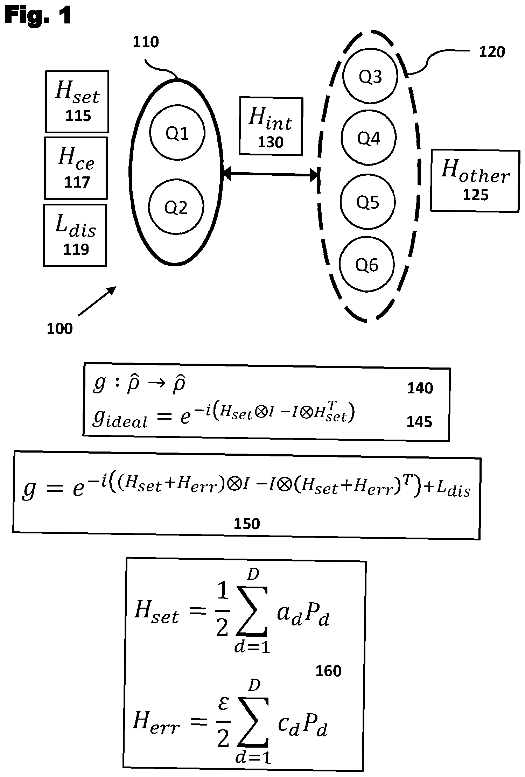

Fig. 1 illustrates some terms that may be used in the following description. A quantum processor **100** may include a plurality of qubits, e.g., six qubits numbered **Q1** to **Q6.** Qubits **Q1 Q2** may be included in a targeted set of qubits **110.** Qubits **Q3** to **Q6** may be included in another set of qubits **120.** The targeted set of qubits **110** may be interacting with the another set of qubits **120,** the interaction being illustrated by a two-sided arrow.

A quantum logic operation $g$ may be applied on the targeted set of qubits **110.** The implementation of the quantum logic operation $g$ may have errors, i.e., it may deviate from an intended ideal version of the quantum logic operation $g_{ideal}$. The errors (deviations) may be of multiple types. The errors may include coherent errors. For example, over-rotation. Over-rotation may be a rotation of the state of a set of qubits, through an angle different than an angle the quantum logic operation is configured to rotate. The errors may include incoherent, or dissipative, errors (e.g., $T_1$ and $T_2$ decay processes occurring during the operation $g$). The deviations may include errors due to interaction of the targeted set of qubits **110** with the another set of qubits **120.** Errors due to this interaction may be referred to as "errors originating from crosstalk", or as "crosstalk".

The ideal version of the quantum logic operation $g_{ideal}$ and the errors may be expressed by generators, i.e., by Hamiltonians and/or Lindbladians. The ideal version of the quantum logic operation $g_{ideal}$ may have a generator $H_{set}$ **115.** The generators of errors may include a generator of coherent errors $H_{ce}$ **117,** a generator of dissipation errors $L_{dis}$ **119,** and a generator of crosstalk errors $H_{int}$ **130.** Because of the crosstalk, the errors may depend on the state and time-evolution of the qubits of the another set of qubits **120.** The generator of the time-evolution of the another set of qubits **120,** excluding crosstalk, may be denoted as $H_{other}$ **125.** The generators $H_{set}$ **115,** $H_{ce}$ **117,** $L_{dis}$ **119** may act only on the targeted set of qubits **110.** The generator $H_{other}$ **125** may be act only on the another set of qubits **120.**

Every quantum operation and generator may be represented as a super-operator. However, some generators and quantum operation may be more conveniently represented as operators. A super-operator representation of an operator $\hat{O}$ may be obtained by Kronecker-products with an identity operator, i.e., the super-operator representation of an operator $\hat{O}$ may be $\hat{O} \otimes I - I \otimes \widehat{O^T}$ .

The generators $H_{set}$ **115,** $H_{ce}$ **117,** $H_{other}$ **125,** $H_{int}$ **130** may be represented as operators. The quantum logic operation $g$ may be represented by a super-operator **140.** The generator $L_{dis}$ **119** may be represented as a super-operator. The sum of the $H_{ce}$ **117,** $H_{other}$ **125,** $H_{int}$ **130** error generators may be denoted by $H_{err}$. The ideal version of the quantum logic operation $g_{ideal}$ may be expressed as an exponent of the generator $H_{set}$ **145.** The expression for $g_{ideal}$ **145** gives $g_{ideal}$ in a super-operator representation. The quantum logic operation $g$ may be expressed as an exponent of the sum of all the generators listed hereinabove **150.**

The generators may be expanded as weighted sums of Pauli terms **160,** i.e., as weighted sums of matrices included in the Pauli group $\mathcal{P}$ . The number of Pauli terms in the expansion may be denoted by $D$. $H_{err}$ may have a magnitude quantified by a scale parameter $\varepsilon$, where the sum may have a unit-norm in a matrix-norm.

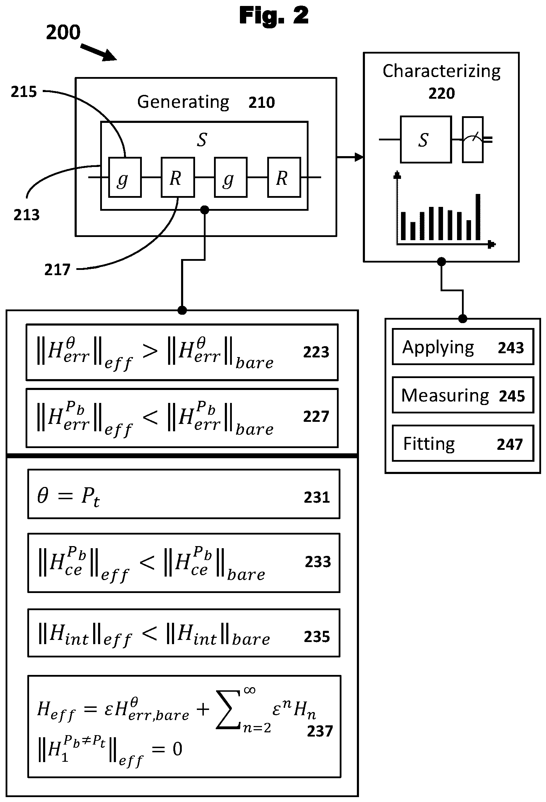

Fig. 2 shows a flowchart illustrating a broad aspect of a computer implemented method **200** for characterizing at least one target error parameter of implementation errors in a quantum logic operation $g$ **215,** according to embodiments of the present disclosure.

The quantum logic operation $g$ **215** may act on a targeted set of qubits of a quantum processor. The quantum logic operation $g$ **215** may be noisy, i.e., it may deviate from an intended ideal operation $g_{ideal}$. This deviation may include coherent errors (e.g., a $\frac{\pi}{2}$ rotation gate may rotate the state of a qubit through an angle different than $\frac{\pi}{2}$) and incoherent, or dissipative, errors (e.g., $T_1$ and $T_2$ decay processes occurring during the operation $g$ **215**). The implementation errors may be quantified by an at least one error parameter. In other words, the implementation errors may be modelled by a model that may include at least one error parameter. The at least one target error parameter may be denoted

$\theta$. The at least one target error parameter $\theta$ may relate to any type of error, i.e., the at least one target error parameter $\theta$ may relate to at least one of the coherent error generator $H_{ce}$, dissipative error generator $L_{dis}$, or crosstalk error generator $H_{int}$.

The method **200** may comprise a step of generating at least one characterization sequence $S$ **210**. The at least one characterization sequence $S$ **213** may include at least one instance of the quantum logic operation $g$ **215**. The at least one characterization sequence $S$ **213** may be configured for amplifying the at least one target error parameter $\theta$ **223**. In other words, the at least one characterization sequence $S$ **213** may be configured for acting on the targeted set of qubits, so as to have an implementation error that relates to the at least one target error parameter $\theta$, that is greater than the implementation error of the quantum logic operation $g$ **215**. In yet other words, the $H_{err}$ may have an effective value, when the quantum logic operation $g$ **215** is included in at least one characterization sequence $S$ **213**. The effective value may be different from the bare value (i.e., when the quantum logic operation $g$ **215** is applied alone). At least one term (e.g., a Pauli term) of the effective $H_{err}$, that may relate to the at least one target error parameter $\theta$, may have a greater value than the bare $H_{err}$.

The at least one characterization sequence $S$ **213** may include at least one refocusing sequence $R$ **217**. Generally, a refocusing sequence may be defined as a sequence of quantum operations that may be configured for controllably amplifying a first set of implementation errors, while concurrently, attenuating a second set of implementation errors.

The at least one refocusing sequence $R$ **217** may be configured so that the at least one characterization sequence $S$ **213** may reduce predefined error generator terms $P_b$ **227**. The predefined error generator terms $P_b$ may include crosstalk between the targeted set of qubits and another set of qubits of the quantum processor. That is, predefined terms of $H_{err}$ may have an effective value less than the bare value. In other words, the at least one refocusing sequence $R$ **217** may be configured so predefined terms (e.g., Pauli terms) of $H_{err}$ may have an effective value less than the bare value. The predefined terms of $H_{err}$, that may have an effective value less than the bare value, may be distinct from the at least one term of the effective $H_{err}$, that may relate to the at least one target error parameter $\theta$.

The method **200** may comprise a step of characterizing the at least one target error parameter $\theta$ **220**. Characterizing the at least one target error parameter $\theta$ **220** may be performed using said at least one characterization sequence $S$ **213** in a characterization protocol (e.g., gate set tomography).

The step of characterizing the at least one target error parameter $\theta$ **220** may include applying the at least one characterization sequence $S$ to the quantum processor **243**. The step of characterizing the at least one target error parameter $\theta$ **220** may include measuring the targeted set of qubits using a measurement apparatus of the quantum processor, thereby obtaining a set of measurement **values** 245. The step of characterizing the at least one target error parameter $\theta$ **220** may include computing a value of the at least one target error parameter $\theta$, by fitting a model to the set of measurement values **247**.

In some embodiments, the at least one characterization sequence $S$ **213** may be configured for reducing predefined coherent error generator terms $P_b$ in the targeted set of qubits **233**. In other words, the at least one refocusing sequence $R$ **217** may be configured so predefined terms $P_b$ (e.g., Pauli terms) of $H_{ce}$ may have an effective value less than the bare value.

In some embodiments, the at least one target error parameter $\theta$ may be a Pauli generator term $P_t$ **231**. That is, expanding $H_{err}$ as a sum of Pauli terms (see expansion **160** in **Fig. 1**), the error parameter may be a coefficient $c_t$ corresponding a Pauli term $P_t$ of $H_{err}$. The Pauli generator term $P_t$ **231** may be any Pauli term of $H_{err}$, i.e., the Pauli generator term $P_t$ **231** may be a Pauli term of the coherent error generator $H_{ce}$, may be a Pauli term of the dissipative error generator $L_{dis}$, or may be a Pauli term of the crosstalk error generator $H_{int}$.

In some embodiments, the at least one characterization sequence $S$ **213** may be configured for increasing a magnitude measure of the crosstalk. This may be desired, for example, in order to characterize crosstalk. In some other embodiments, the at least one characterization sequence $S$ **213** may be configured to reduce a magnitude measure of said crosstalk. This may be desired, for example, in order to characterize coherent errors or dissipative errors. The magnitude measure may be defined by a measured quantity, for example, a frequency of Rabi oscillation, or a correlation coefficient of correlation between qubits. It is noted that a magnitude measure of the crosstalk can be reduced, while at the same time some terms of the crosstalk may be amplified.

In some embodiments, the at least one characterization sequence $S$ **213** may be configured to eliminate at least a first-order error of implementation errors distinct from the at least one target error parameter $\theta$ **237**. That is, the error generator $H_{err}$ may be expanded as a Dyson-series (or as a Magnus-expansion) according to the scale-parameter $\varepsilon$. The linear term in the Dyson-series of the error generator $H_{err}$ may be denoted $H_1$. A zeroth term of the Dyson-series is equal to $H_{set}$ and therefore can be ignored (not included in the expansion). An effective value of $H_1$ may only include terms that are related to the at least one target error parameter $\theta$. These terms may be equal to $H_{err,bare}^{\theta}$. For example, the at least one target error parameter $\theta$ may be a Pauli term $P_t$. Coefficients of Pauli terms $P_b$ in the effective value of $H_1$, that are distinct from $P_t$, may be zero. An effective value of $P_b \neq P_t$ may scale as $O(\varepsilon^n)$ with $n \geq 2$. Higher order term cancelation for $n > 2$ can be achieved, for example, using higher order DD concatenation.

It is noted that when a first-order error of implementation errors is eliminated **237**, the linear term in $H_{eff}$ may be multiplied by a transfer function. The transfer function may be a function that maps the implementation errors from "during-errors" to "after-errors". That is, a function that maps representation of errors from occurring during the application of the quantum logic operation $g$, to occurring after the application of the quantum logic operation $g$.

In some embodiments, the at least one characterization sequence $S$ **213** may include $q$ germs (see hereinbelow for elaboration). An effective value of $P_t$ may be $\varepsilon q N_g \times H_{err,bare}^{\theta}$, i.e., the coefficient $c_t$ may be $\varepsilon q N_g \times H_{err,bare}^{\theta}$, where $N_g$ is the number of gates g in a germ.

In some embodiments, terms of order higher than the first, in the perturbative expansion of $H_{err}$ may be reduced. That is, an effective value of at least one $H_n$, where n > 1, may be reduced compared to a bare value of the at least one $H_n$. For example, an effective value of $H_2$ (the term quadratic in $\varepsilon$) may be reduced compared to a bare value of $H_2$. In some embodiments, an effective value of the at least one $H_n$ may only include terms are related to the at least one target error parameter $\theta$.

In some embodiments, the at least one characterization sequence $S$ may be configured to eliminate predefined Pauli generator terms of the implementation errors distinct from the at least one target error parameter. In other words, the effective value of the predefined Pauli generator terms may be less than a predefined threshold. Therefore, the effective value of the predefined Pauli generator terms of the implementation errors may be equivalent to zero. For example, a first-order error may vanish.

In some embodiments, the at least error parameter $\theta$ may include a plurality of targeted error parameters. For example, a plurality of Pauli terms $P_t^{(i)}$. In other embodiments, the at least one target error parameter $\theta$ may consist of a single error parameter. In other words, method may characterize a single target error parameter of implementation errors in the quantum logic operation $g$.

In some embodiments, the method **200** may include recompiling the at least one characterization sequence $S$ **213**. The recompiling may include replacing adjacent quantum operations (i.e., quantum operations that should be run immediately one after the other) by equivalent quantum operations. The recompiling may be performed in order to enhance a performance of the at least one characterization sequence $S$ **213**. The performance of the at least one characterization sequence $S$ **213** may be enhanced, for example, by not using quantum operations having large implementation errors.

In some embodiments, the method may be repeated in order to characterize all error parameters of the quantum logic operation $g$. In other words, the method may be repeated in order to completely characterize the quantum logic operation $g$.

The method **200** may be performed in parallel. That is, the method **200** may be applied to at least two quantum logic operations in parallel. In some embodiments, the method **200** may be applied to a gate layer. That is, the quantum logic operation $g$ **215** may be a gate layer. In some embodiments, the at least one refocusing sequence $R$ **217** may include at least one gate layer.

The method **200** may be used to characterize quantum processors. A quantum processor may include a plurality of quantum logic operations. A method for characterizing the quantum processor may include applying the method **200** to at least one quantum logic operation that may be included in the plurality of quantum logic operations of the quantum processor.

The method **200** may be applicable to quantum processors that may include qudits, i.e., quantum systems where the number of states that may be measured, may include more than two states. Mathematically, a qudit may be described by a state vector $\mathbb{C}^n$ where n > 2. In some embodiments, the different states of the qudits of the quantum processor may be mapped to equivalent states of qubits. For example, referring to **Fig. 1,** the qubits **Q1** through **Q6** may be replaced by qutrits, i.e., qudits that may have three states that may be measured. A state vector of the quantum processor **100** may then include 81 states. These 81 states may be mapped to 81 states of a virtual quantum processor that may include 7 qubits. 47 states of the virtual quantum processor may be unused. That is, the entries of the state-vector, representing these 47 states may be set to zero throughout any computation. In a different example, the qubits **Q1** through **Q6** may be replaced by systems qudits that may have four states that may be measured. A state vector of the quantum processor **100** may then include 4096 states. The state vector may be mapped to a virtual quantum processor that may include 12 qubits, where no state of the virtual quantum processor may be unused. In some embodiments, Pauli matrices may be replaced by generators of the $SU(n)$ group.

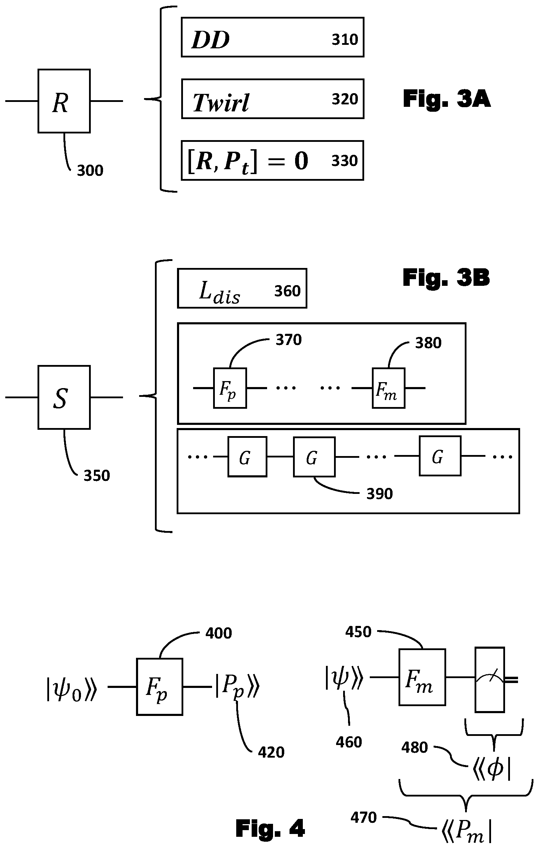

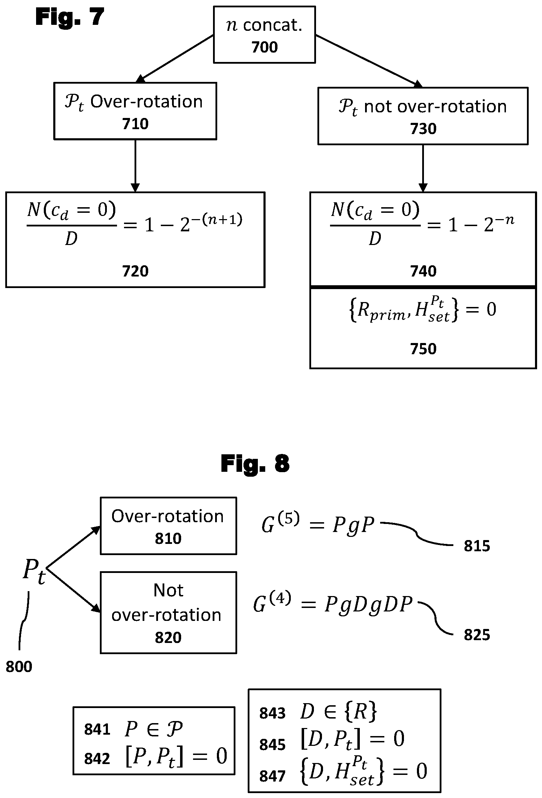

**Fig. 3A** schematically illustrates features of the at least one refocusing sequence, according to embodiments of the present disclosure. In some embodiments, the at least one refocusing sequence **300** may be a dynamical decoupling sequence **310**. In other words, the at least one refocusing sequence **300** may include at least one dynamical decoupling sequence **310**. In some embodiments, the at least one refocusing sequence **300** may be a twirling sequence **320**. In other words, the at least one refocusing sequence **300** may include at least one twirling sequence **320**. In some embodiments, the at least one refocusing sequence **300** may include both dynamical decoupling sequences **310** and twirling sequences **320**. Further features of twirling sequences **320,** according to embodiments of the present disclosure, may be described hereinbelow in relation to **Fig. 8**.

In some embodiments, the at least one target error parameter $\theta$ may be a Pauli generator term $P_t$. The at least one refocusing sequence **300** may commute with said Pauli generator term $P_t$ **330**.

**Fig. 3B** schematically illustrates features of the at least one characterization sequence, according to embodiments of the present disclosure. In some embodiments, the at least one characterization sequence $S$ **350** may be configured for characterizing dissipation implementation errors. In other words, the at least one characterization sequence $S$ **350** may be configured to characterize $L_{dis}$. The dissipation implementation errors may be Markovian and/or non-Markovian. In other words, in some embodiments, $L_{dis}$ may depend only on the quantum logic operation $g$. In other embodiments, $L_{dis}$ may also depend on any other parameter, such as a power spectrum of the noise (i.e., power spectrum of fluctuations), on other gates that may have been applied, on gates that may be applied in parallel to the quantum logic operation $g$. The refocusing sequences may keep the fluctuations in the $P_t$ parameter. That is, the refocusing sequences may reduce the fluctuations in other parameters.

In some embodiments, the at least one characterization sequence $S$ **350** may include at least one fiducial operation. The at least one fiducial operation may include a preparation fiducial operation **370**. The preparation fiducial operation **370** may set a state of the targeted set of qubits to a predefined state. For example, the preparation fiducial operation **370** may be applied after a reset operation or after a measurement operation. The at least one fiducial operation may include a measurement fiducial operation **380**. The measurement fiducial operation **380** may change a state of the targeted set of qubits before a measurement of the targeted set of qubits. The measurement fiducial operation **380** may be applied in order to measure the targeted set of qubits in a predefined base. For example, a measurement apparatus of the quantum processor may support measurement of qubits in only the $Z$ basis. A measurement of the targeted set of qubits in the $X$ basis may be needed. The measurement fiducial operation **380** may rotate the state of the targeted set of qubits, so a measurement according to the $Z$ basis, of the rotated state, may correspond to a measurement according to the $X$ basis, of the unrotated state.

In some embodiments, the least one fiducial operation may include at least one gate layer.

Further features of fiducial operations, according to embodiments of the present disclosure, may be described hereinbelow in relation to **Figs. 4-5**.

In some embodiments, the at least one characterization sequence $S$ **350** may include at least one germ **390**. The at least one germ **390** may be a quantum operation or a sequence of quantum operations (e.g., a subcircuit). The at least one germ **390** may be configured to be sensitive to the at least one target error parameter $\theta$.

In some embodiments, the at least one characterization sequence $S$ 350 may include a plurality of characterization sequences, that may have a varying number of germs. In other words, the plurality of characterization sequences may include at least a first characterization sequence and a second first characterization sequence. The number of germs included in the first characterization sequence may be different than the number of germs included in the second characterization sequence. In some embodiments, the number of germs may be logarithmically spaced. In other words, the number of germs, in each characterization sequence included in the plurality of characterization sequences, may be equal to integer powers of an integer number. For example, the number of germs may be powers of two (1, 2, 4, 8, ...). In some embodiments, the number of germs may be powers of a fractional number $f_r > 1$, rounded to the nearby integer. For

example: $f_r = 1.4$, and the number of germs may be $$int(f_r^n) \ = \ [1, 2, 3, 5, 7, 10, 14, 20, 28, 40, ...]$$

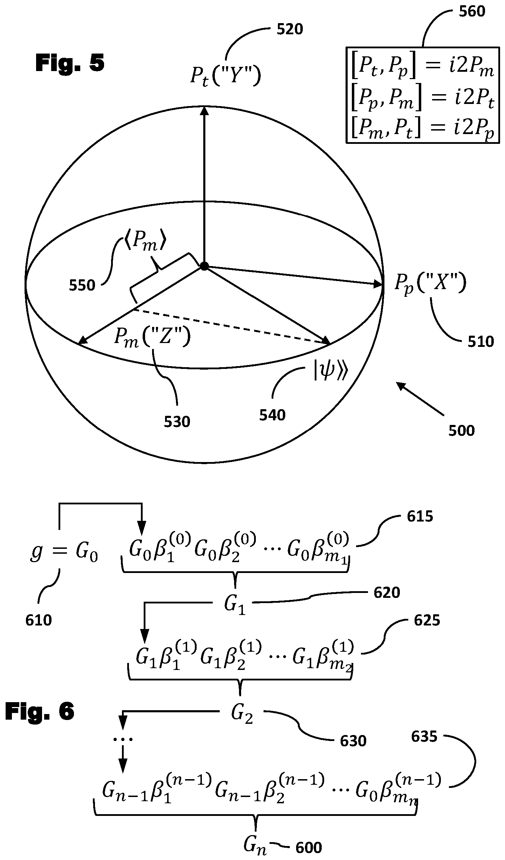

Further features of germs, according to embodiments of the present disclosure, may be described hereinbelow in relation to **Figs. 6-7**.

**Fig. 4** illustrates properties of fiducial operations according to embodiments of the present disclosure. In some embodiments, the at least one fiducial operation may include state preparation operations **400** configured for setting a state of the set of qubits to a preparation Pauli state $P_p$ **420**. That is, the state preparation operations **400** may set the state of the set of qubits to a state that may be represented by a Pauli matrix. The at least one fiducial operation may include measuring the set of qubits according to a measurement Pauli $P_m$ **470**. That is, measuring a coefficient of a Pauli term of the state of the set of qubits **460**. Measuring the set of qubits according to a measurement Pauli $P_m$ **470** may include applying a measurement fiducial operation **450** and measuring the set of qubits according to a natively available measurement operation **480**. Measuring the qubits **480** after applying the measurement fiducial operation **450** may be equivalent to measuring a coefficient of a Pauli term of the state of the set of qubits **460**.

In some embodiments, measuring the set of qubits according to a measurement Pauli $P_m$ **470** may be natively supported by the quantum processor. The measurement fiducial operation **450** may be omitted.

**Fig. 5** illustrates further properties of fiducial operations according to embodiments of the present disclosure. In some embodiments, the preparation Pauli state $P_p$, the measurement Pauli $P_m$, and the Pauli generator term $P_t$, may span

an algebra isomorphic to the *SU*(2) Lie algebra. That is, the preparation Pauli state $P_p$, measurement Pauli $P_m$, and the Pauli generator term $P_t$, may have commutation relations **560** that constitute an *SU*(2) Lie algebra. That is, for example, the commutator of the Pauli generator term $P_t$ and the preparation Pauli state $P_p$ may equal the measurement Pauli $P_m$, up to a $\frac{\pi}{2}$ phase. The preparation Pauli state $P_p$, measurement Pauli $P_m$, and the Pauli generator term $P_t$, may each correspond an axis of a Bloch sphere **500**. The preparation Pauli state $P_p$ **510** may correspond the *X* axis of the Bloch sphere **500**. The measurement Pauli $P_m$ **520** may correspond the *Z* axis of the Bloch sphere **500**. The Pauli generator term $P_t$ 530 may correspond the *Y* axis of the Bloch sphere **500**. The measurement according to the measurement Pauli $P_m$ may correspond to a projection **550** of a state of the set of qubits **540** on the measurement Pauli $P_m$ axis (*Z* axis) of the Bloch sphere **500**.

In some embodiments, the preparation Pauli state $P_p$ and measurement Pauli $P_m$ may be configured for increasing a sensitivity of the least one characterization sequence *S* to the at least one error parameter $\theta$.

In some embodiments, where the at least one characterization sequence *S* may include at least one germ, the at least one germ may be a recursively concatenated germ.

**Fig. 6** illustrates a recursively concatenated germ **600**. Conceptually, the recursively concatenated germ **600** may be built by concatenating intermediate germs, themselves defined as recursively concatenated germs. In some embodiments, the at least one refocusing sequence may include a set of refocusing sequences. The at least one characterization sequence *S* may include a recursively concatenated germ. The recursively concatenated germ may be obtained by computing a predefined number *n* of concatenations $G_{k+1} = \prod_m G_k \beta_m^{(k)}$, wherein $k = 0, 1, \ldots, n-1$. The $\beta_m^{(k)}$ may be refocusing sequences included in the set of refocusing sequences. $G_0 = g$, where *g* may be the quantum logic operation (i.e., the quantum logic operation that may be characterized).

In more detail, the quantum logic operation *g* may define an end case, or a recursion base $G_0$ **610**. A first subsequence **615** may include $m_1$ instances of $G_0$. The first subsequence **615** may include refocusing sequences $\beta_i^{(0)}$ after each instance of $G_0$. The first subsequence **615** may be denoted $G_1$ **620**.

A second subsequence **625** may include $m_2$ instances of $G_1$. The first subsequence **625** may include refocusing sequences $\beta_i^{(1)}$ after each instance of $G_1$. The second subsequence **625** may be denoted $G_2$ **630**.

A third subsequence, fourth subsequence, and further subsequences may be obtained in a similar way. The recursively concatenated germ **600** may be the *n*'th subsequence **635**. The recursively concatenated germ **600** may be denoted by $G_n$.

Each concatenation, where a preceding subsequence $G_{k-1}$ is concatenated to obtain a subsequence $G_k$ may be referred to as a concatenation step. Therefore, n concatenation steps may be performed in order to obtain the recursively concatenated germ **600**. In other words, the recursively concatenated germ **600** may have n concatenation steps.

Generally, any subsequence $G_k$ may not be restricted to include only the preceding subsequence $G_{k-1}$ and refocusing sequences. In other words, any of the refocusing sequences $\beta_i^{(j)}$ may be replaced by any quantum operation.

Generally, any subsequence $G_k$ may not be restricted to include only one quantum operation after each instance of the preceding subsequence $G_{k-1}$. In other words, any of the refocusing sequences $\beta_i^{(j)}$ may be replaced by multiple quantum operations. In some embodiments, any subsequence $G_k$ may include quantum operations before the first instance of $G_{k-1}$. For example, the first subsequence **615** may be $G_1 = \beta_0^{(0)} G_0 \beta_1^{(0)} G_0 \beta_2^{(0)} \cdots G_0 \beta_{m_1}^{(0)}$.

In some embodiments, at least one of the $\beta_i^{(j)}$ may be omitted. In other words, in any subsequence $G_k$, at least two instances of the preceding subsequence $G_{k-1}$ may have no quantum operation between them. In yet other words, any subsequence $G_k$, may include powers of the preceding subsequence $(G_{k-1})^N$, where $N > 1$. For example, the second subsequence **625** may be $G_2 = G_1 \beta_1^{(1)} G_1 \beta_2^{(1)} \cdots (G_1)^N \beta_q^{(1)} \cdots G_1 \beta_{m_2}^{(1)}$.

Generally, the recursively concatenated germ **600** may be obtained in an iterative process instead of a recursive process. In other words, no routine that may be included in an algorithm, used to obtain the recursively concatenated germ **600,** may need to call itself as a subroutine. In some embodiments, a combination of an iterative process and a recursive process may be used in an algorithm for obtaining the recursively concatenated germ **600.**

**Fig. 7** illustrates properties of recursively concatenated germs. A recursively concatenated germ may be configured to eliminate a predefined number of Pauli terms of implementation errors. In other words, the recursively concatenated germ may be configured to zero (i.e., reduce below a predefined threshold) a predefined number of coefficients $c_d$ of Pauli terms of an effective value of $H_{err}$. The predefined number of eliminated Pauli terms may depend on the number of concatenation steps n and on the type of the at least one error parameter $\theta$.

The at least one error parameter $\theta$ may be a Pauli generator term $P_t$. The Pauli generator term $P_t$ may be an over-rotation term **710.** That is, the Pauli generator term $P_t$ may relate to a deviation of a rotation angle from a rotation angle that the quantum logic operation $g$ may be configured to perform. The recursively concatenated germ may comprise at least $n$ concatenation steps **700.** The at least one characterization sequence $S$ may be configured to eliminate a fraction of $1 - 2^{-(n+1)}$ of Pauli generator terms of the implementation errors **720.** In other words, the number of coefficients $c_d$ that may be zero, divided by $D$ (the number of Pauli terms in the expansion of $H_{err}$), may equal $1 - 2^{-(n+1)}$. For example, for a single concatenation step, three quarters of the coefficients $c_d$ may be set to zero. For two concatenation steps, seven eighths of the coefficients $c_d$ may be set to zero. The coefficients $c_d$ that may be zero, may be distinct from the coefficient $c_t$ that may correspond the Pauli generator term $P_t$.

The at least one error parameter $\theta$ may be a Pauli generator term $P_t$. The Pauli generator term $P_t$ may be distinct from an over-rotation term **730.** The recursively concatenated germ may have at least $n$ concatenation steps **700.** The at least one characterization sequence $S$ may be configured to eliminate a fraction of $1 - 2^{-n}$ of Pauli generator terms of the implementation errors **740.** In other words, the number of coefficients $c_d$ that may be zero, divided by $D$ (the number of Pauli terms in the expansion of $H_{err}$), may equal $1 - 2^{-n}$. For example, for a single concatenation step, half of the coefficients $c_d$ may be set to zero. For two concatenation steps, three quarters of the coefficients $c_d$ may be set to zero. The coefficients $c_d$ that may be zero, may be distinct from the coefficient $c_t$ that may correspond the Pauli generator term $P_t$.

In some embodiments, the at least one characterization sequence $S$ may be configured to isolate the Pauli generator term $P_t$ of the implementation errors. In other words, only the coefficient $c_t$, that may correspond $P_t$ in expansion of the effective value $H_{err}$ (according to Pauli matrices), may not be zero. For example, the quantum logic operation $g$ may be a two-qubit gate, therefore, there may be 16 Pauli terms in the expansion of $H_{err}$. The Pauli generator term $P_t$ may be distinct from an over-rotation term **730,** and there may be at least four concatenation steps. In a different example, the Pauli generator term $P_t$ may be an over-rotation term **720,** and there may beat least three concatenation steps.

The fraction of eliminated Pauli generator terms may depend on the choice of the refocusing sequences that may be included in the recursively concatenated germ, and may depend on how each refocusing sequence may be included. In other words, using the notation used in relation to **Fig. 6,** what may the exact $\beta_i^{(j)}$ be. One refocusing sequence, that may eliminate a half of the Pauli generator terms, may be referred to as a "primary refocusing sequence". A refocusing sequence other than the primary refocusing sequence may be referred to as a "secondary refocusing sequence". The choice of secondary refocusing sequences may be permutation-invariant. That is, a recursively concatenated germ may include secondary refocusing sequences that may be included in a set of refocusing sequences $\{\beta\}$. Swapping of any secondary refocusing sequence $\beta_i$ by any secondary refocusing sequence $\beta_j$, where $i \neq j$, may have no effect on the recursively concatenated germ.

In some embodiments, the Pauli generator term $P_t$ may be distinct from an over-rotation term. The at least one refocusing sequence may include a primary refocusing sequence $R_{prim}$. The primary refocusing sequence may anti-commute with a corresponding Pauli generator term $H_{set}^{P_t}$ of an ideal version of said quantum logic operation $g$ (that is, $g_{ideal}$) **750.**

Examples of recursively concatenated germs, that may be included in the at least one characterization sequence $S$ are given hereinbelow. In contrast to the description relating to **Fig 6,** the notation used for these exemplary recursively concatenated germs may not indicate a number of concatenation steps. That is, $G_n$ may not necessarily have n concatenation steps.

The Pauli generator term $P_t$ may be an over-rotation term. In some embodiments, the at least one characterization sequence $S$ may include at least one of the germs $G_0^{(1)} = gA$, and $G_1^{(1)} = BG_0^{(1)}CG_0^{(1)}$, where $A, B, C$ may be refocusing sequences. In some embodiments, the at least one characterization sequence $S$ may include at least one of the germs $G_0^{(2)} = gAgA$, and $G_1^{(2)} = BG_0^{(2)}CG_0^{(2)}$, where $A, B, C$ may be refocusing sequences.

The Pauli generator term $P_t$ may be distinct from an over-rotation term. In some embodiments, the at least one characterization sequence $S$ may include at least one of the germs

$$G_0^{(3)} = gAgA, \ G_1^{(3)} = G_0^{(3)} A G_0^{(3)} A, \ G_2^{(3)} = B G_1^{(3)} C G_1^{(3)} \text{, and } G_3^{(3)} = G_1^{(3)} B G_1^{(3)} C \text{, wherein } A, B,$$

$C$ may be refocusing sequences.

As indicated hereinabove, in the description relating to **Fig 3A,** the at least one refocusing sequence may include at least one twirling sequence. The at least one twirling sequence may include randomly sampled quantum operations. In other words, the at least one characterization sequence $S$ may include randomly sampled quantum operations. In some embodiments, the random sampling may include randomly sampling refocusing sequences. In some embodiments, the at least one characterization sequence $S$ may include refocusing sequences randomly sampled for each application of the at least one characterization sequence $S$.

**Fig. 8** illustrates features and examples of twirling subsequences, that may be included in characterization sequences, according to embodiments of the present disclosure.

The at least one error parameter $\theta$ may be a Pauli generator term $P_t$ **800**. The Pauli generator term $P_t$ **800** may be an over-rotation Pauli term **810**. The at least one characterization sequence $S$ may include at least one subsequence $G^{(5)} = PgP$ **815**. $P$ may be a randomly sampled Pauli operator **841**. $P$ may commute with the Pauli generator term $P_t$ **842**.

The at least one error parameter $\theta$ may be a Pauli generator term $P_t$ **800**. The Pauli generator term $P_t$ **800** may be distinct from an over-rotation Pauli term **820**. The at least one characterization sequence $S$ may include at least one subsequence $G^{(4)} = PgDgDP$ **825**. $P$ may be a randomly sampled Pauli operator **841**. $D$ may be a refocusing sequence **843**. $D$ may commute with the Pauli generator term $P_t$ **845**. $D$ may anti-commute with a corresponding Pauli generator term $H_{set}^{P_t}$ of an ideal version of said quantum logic operation $g$ **847**. In some embodiments, $D$ may be randomly sampled.

Some embodiments that may use twirling subsequences, may include averaging over characterization sequences. In other words, a plurality of characterization sequences may be applied to the targeted set of qubits. The qubits may be measured after each application of a characterization sequence. The results of the measurements may be averaged.

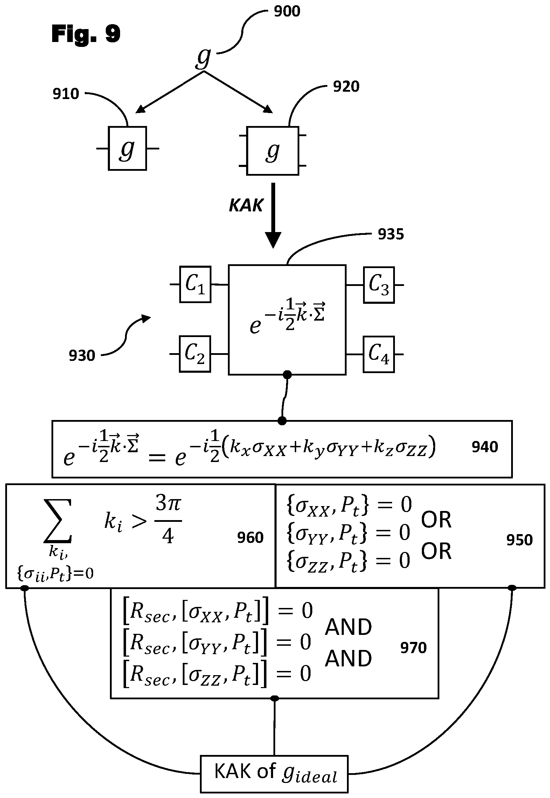

**Fig. 9** illustrates properties of quantum logic operations and refocusing sequences according to embodiments of the present disclosure. In some embodiments, the quantum logic operation $g$ **900** may be a single-qubit operation **910**. In some other embodiments, the quantum logic operation $g$ **900** may be a two-qubit operation **920**. A KAK decomposition **930** of the quantum logic operation $g$ **900** may include any of one generator, two generators, and three generators.

The KAK decomposition **930** is as follows. Any two-qubit operation may be equivalent to a two-qubit operation of a type $e^{-\frac{i}{2}\vec{k}\cdot\vec{\Sigma}}$ **935**, preceded by two single-qubit operations $C_1$, $C_2$, and succeeded two single-qubit operations $C_3$, $C_4$. Any of the single qubit operations $C_1$ to $C_4$ can be an identity operation. The vector $\vec{k}$ represents three real-valued parameters $k_x$, $k_y$, $k_z$. The vector $\vec{\Sigma}$ represents the three operators $\sigma_{XX}$, $\sigma_{YY}$, $\sigma_{ZZ}$. Therefore, the operation of a type $e^{-\frac{i}{2}\vec{k}\cdot\vec{\Sigma}}$ **935** is a two-qubit operation with a generator that is a weighted-sum of the operators represented by $\vec{\Sigma}$, with weights given by $\vec{k}$ **940**. If the vector $\vec{k}$ includes only non-zero elements, the KAK decomposition may be described as having three generators. If the vector $\vec{k}$ includes one or two non-zero elements, the KAK decomposition may be described as having one generator or having two generators, respectively.

It is noted that with a change of basis of the qubits, the generators represented by $\vec{\Sigma}$ may be permuted, or may be changed to any of the operators $\sigma_{XY}$, $\sigma_{XZ}$, $\sigma_{YX}$, $\sigma_{YZ}$, $\sigma_{ZX}$, $\sigma_{ZY}$. For example, rotating the basis of the second qubit, the generators $\sigma_{XX}$, $\sigma_{YY}$, $\sigma_{ZZ}$ may change to $\sigma_{XY}$, $\sigma_{YZ}$, $\sigma_{ZX}$.

The significance of the KAK decomposition is that single-qubit operations may have implementation-errors that are negligible in comparison to implementation errors of two-qubit operations. Therefore, in some embodiments, a characterization of the two-qubit quantum logic operation $g$ **920** may be achieved by characterizing a corresponding operation of a type $e^{-\frac{i}{2}\vec{k}\cdot\vec{\Sigma}}$ **935**. Characterizing the corresponding operation of a type $e^{-\frac{i}{2}\vec{k}\cdot\vec{\Sigma}}$ **935** may have the benefit of simpler characterization procedure, least for having a simpler structure. In some embodiments, characterizing the corresponding operation of a type $e^{-\frac{i}{2}\vec{k}\cdot\vec{\Sigma}}$ **935** may include replacing at least one instance of the quantum logic operation $g$ **900** by $(C_1^\dagger \otimes C_2^\dagger)g(C_3^\dagger \otimes C_4^\dagger)$.

In some embodiments, the quantum logic operation $g$ **900** may be a two-qubit operation **920**. The at least one

target error parameter $\theta$ may be a Pauli generator term $P_t$. An ideal version of said quantum logic operation $g$ may have a KAK decomposition having coefficients $k_x$, $k_y$, $k_z$. The Pauli generator term $P_t$ may anti-commute with at least one generator of the KAK decomposition of the ideal version of said quantum logic operation $g$ **950**. A sum of coefficients may greater than $\dfrac{3\pi}{4}$, where the coefficients may correspond to the at least one KAK generator anti-commuting with the Pauli generator term $P_t$. In other words, the sum of coefficients, that correspond the generators that anti-commute with the Pauli generator term $P_t$, may be greater than $\dfrac{3\pi}{4}$ **960**. The at least one refocusing sequence comprises at least one secondary refocusing sequence $R_{sec}$. The at least one secondary refocusing sequence $R_{sec}$ may commute with all commutators of the Pauli generator term $P_t$ and generators of said KAK decomposition of an ideal version of said quantum logic operation $g$ **970**.

It is noted that if any of the coefficients $k_x$, $k_y$, $k_z$ is zero, the corresponding KAK generator may be omitted from the anti-commutation conditions **950** and the commutation conditions **960**. That is, for example, if the coefficient $k_z$ is zero, the anti-commutation conditions **950** may require that $\{\sigma_{XX}, P_t\} = 0$ or $\{\sigma_{YY}, P_t\} = 0$. Whether the condition $\{\sigma_{ZZ}, P_t\} = 0$ is met, may be irrelevant. The commutation conditions **960** may require that $[R_{sec}, [\sigma_{XX}, P_t]] = 0$ and $[R_{sec}, [\sigma_{YY}, P_t]] = 0$. Whether the condition $[R_{sec}, [\sigma_{ZZ}, P_t]] = 0$ is met, may be irrelevant.

It is noted that single-qubit gates may have a "degenerate KAK decomposition". The single qubit operations $C_1$ to $C_4$ may all be identity operations. The generators may be $\sigma_{XI}$, $\sigma_{YI}$, $\sigma_{ZI}$. Because the generators do not affect the second qubit, the single-qubit rotation about the $\vec{k}$ axis operator is obtained.

As indicated hereinabove in the description relating to **Fig. 2,** methods according to the present disclosure may be applied in parallel for multiple quantum logic operations (i.e., at least two quantum logic operations). In some embodiments, the qubits may be partitioned. That is, the qubits may be divided into qubit-sets. The qubit-sets may each include qubit-subsets that may have characterization sequences applied to them simultaneously. In other words, subsets of a single qubit-set may include qubits, that quantum logic operations that may be applied to them, may be characterized in parallel. Qubit-subsets can include only a single qubit.

The partition may depend on the quantum logic operations that may be characterized, may depend on the target error parameters that may be selected, may depend on the characterization sequences and refocusing sequences that may be used, and may depend on characteristics of the quantum processor.

The partition may be described by hypergraphs. A qubit-subset may correspond to an edge of a hypergraph. The plurality of qubit-subsets may together form a complete hypergraph. Hyperedges can overlap, i.e., a qubit may be included in two hyperedges of the hypergraph.

In some embodiments, an edge of a hypergraph may include qubits that may have crosstalk between them. The hypergraph may then be referred to as "interaction hypergraph". In some embodiments, the at least two quantum logic operations may operate on corresponding subsets of qubits (i.e., qubit-subsets). Each of the corresponding subsets of qubits may have no common qubit. That is, for each pair of subsets of qubits, no qubit may be common to the subsets of qubits. In some embodiments, no crosstalk may be present between each of the corresponding subsets of qubits. In the language of hypergraphs, each of the corresponding subsets of qubits may be included in a corresponding hyperedge of an interaction hypergraph. Each of the corresponding hyperedges may be unique (i.e., may have no overlap) for each of the corresponding subsets of qubits. The process of partitioning may be referred to as "coloring of a hypergraph".

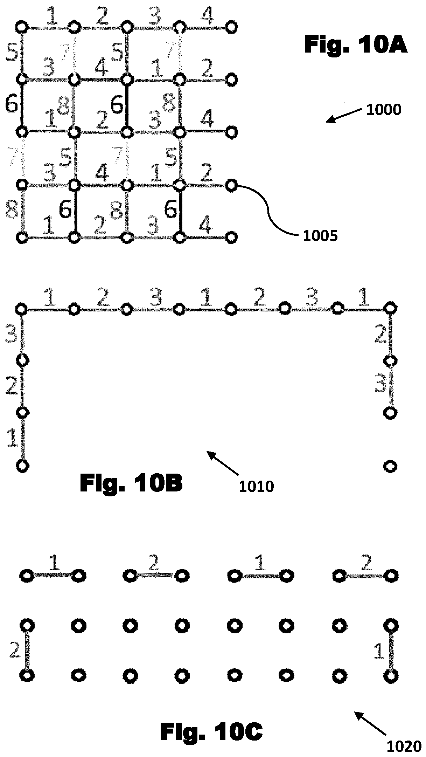

**Figs. 10A-10C** illustrate exemplary partitions of qubits according to embodiments of the present disclosure. **Fig. 10A** illustrates a quantum processor **1000** that may have a plurality of qubits, such as qubit **1005**. The plurality of qubits may be physically positioned so as to form a square lattice. The qubits may have crosstalk. The crosstalk may be modelled by a nearest-neighbor model between pairs of qubits. An interaction hypergraph may be equivalent to a regular graph. An edge may connect a pair of qubits having crosstalk between them.

A characterization method, according to embodiments of this disclosure, may be applied in order to characterize quantum logic operations of the quantum processor **1000**. The quantum logic operations may be two-qubit operations. The quantum logic operations may be applied to any pair of qubits that are nearest neighbors. Each quantum logic operation may operate on a corresponding qubit-subset of two qubits. A corresponding qubit-subset of two qubits may correspond an edge of the graph (hyperedge of the interaction hypergraph). The at least one target error parameter may be Pauli generator terms of crosstalk ($H_{int}$), between qubits included in the corresponding qubit-subset, and qubits not included in the corresponding qubit-subset.

The refocusing sequences may consist of dynamical decoupling sequences. Each of the corresponding qubit-subsets may have no common qubit. No crosstalk may be present between each of the corresponding qubit-subsets. In other words, each corresponding qubit-subset may be separated by at least one qubit.

The plurality of qubits may be partitioned into 8 qubit-sets. Therefore, characterizing all the quantum logic operations may require applying the characterizing method eight times, each time to a different qubit-set. That is, in each time, the method may be applied, in parallel, to quantum logic operations that may correspond qubit-subsets that may be included in a single qubit-set.

The qubit-sets may be numbered from 1 to 8. Each qubit-subset (graph edges) is labeled according to the qubit-set that may include it.

**Fig. 10B** illustrates a quantum processor **1010**. The settings of the quantum processor **1010** may be similar to the settings of the quantum processor **1000** illustrated in **Fig. 10A**. A difference between the quantum processor **1000** and the quantum processor **1010** may be that in the quantum processor **1010,** the qubits may be positioned so as to form a one-dimensional chain. The characterization method applied to the quantum processor **1010** may be similar to the method applied to the quantum processor **1000.**

The plurality of qubits may be partitioned into 3 qubit-sets. The qubit-sets may be numbered from 1 to 3. Each qubit-subset (graph edges) is labeled according to the qubit-set that may include it.

**Fig. 10C** illustrates a quantum processor **1020**. The settings of the quantum processor **1020** may be similar to the settings of the quantum processor **1000** illustrated in **Fig. 10A**. The characterization method applied to the quantum processor **1020** may be similar to the method applied to the quantum processor **1000**. A difference between the characterization method applied to the quantum processor **1000,** and the characterization method applied to the quantum processor **1020,** may be that in the characterization method applied to the quantum processor **1020,** the at least one target error parameter may be Pauli generator terms of an error generator that may act inside each of the qubit-subsets. That is, the at least one target error parameter may be Pauli generator terms of $H_{ce}$ or $L_{dis}$ of each of the qubit-subsets. Another difference is that the method may be applied to select qubits of the quantum processor **1020**. The select qubits may form a one-dimensional chain.

It is noted that the partitioning of the qubits in the quantum processor **1020** may be different from the partitioning of the qubits in the quantum processor **1010**. In the quantum processor **1020,** crosstalk can be present between each of the corresponding qubit-subsets. This is in contrast to the quantum processor **1010** where, as indicated hereinabove, crosstalk may not be present between each of the corresponding qubit-subsets. The difference in the partition may be caused by the different at least one target error parameter.

The plurality of qubits may be partitioned into 2 qubit-sets. The qubit-sets may be numbered from 1 to 2. Each qubit-subset (graph edges) is labeled according to the qubit-set that may include it.

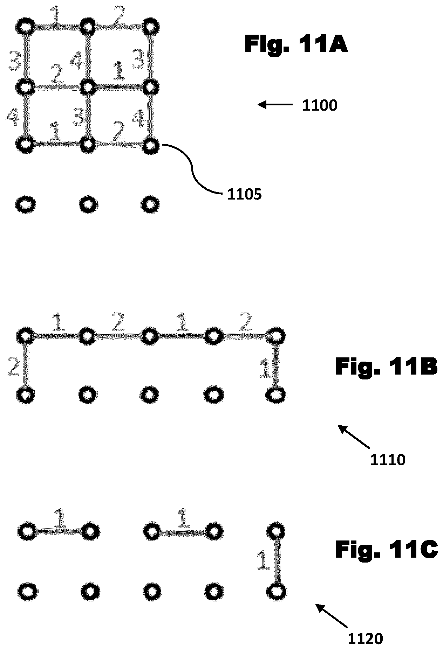

**Fig. 11A-11C** illustrate partitions of qubits according to other embodiments of the present disclosure. **Fig. 11A** illustrates a quantum processor **1100** that may have a plurality of qubits, such as qubit **1105**. The plurality of qubits may be physically positioned so as to form a square lattice. The qubits may have crosstalk. The crosstalk may be modelled by a nearest-neighbor model between pairs of qubits. An interaction hypergraph may be equivalent to a regular graph. An edge may connect a pair of qubits having crosstalk between them.

A characterization method, according to embodiments of this disclosure, may be applied in order to characterize quantum logic operations of the quantum processor **1100**. The quantum logic operations may be two-qubit operations. The quantum logic operations may be applied to any pair of qubits that are nearest neighbors. Each quantum logic operation may operate on a corresponding qubit-subset of two qubits. A corresponding qubit-subset of two qubits may correspond an edge of the graph (hyperedge of the interaction hypergraph). The at least one target error parameter may be Pauli generator terms of crosstalk ($H_{int}$), between qubits included in the corresponding qubit-subset, and qubits not included in the corresponding qubit-subset.

The refocusing sequences may consist of twirling sequences. Each of the corresponding qubit-subsets may have no common qubit.

The plurality of qubits may be partitioned into 4 qubit-sets. Therefore, characterizing all the quantum logic operations may require applying the characterizing method four times, each time to a different qubit-set. That is, in each time, the method may be applied, in parallel, to quantum logic operations that may correspond qubit-subsets that may be included in a single qubit-set.

The qubit-sets may be numbered from 1 to 4. Each qubit-subset (graph edges) is labeled according to the qubit-set that may include it.

**Fig. 11B** illustrates a quantum processor **1110**. The settings of the quantum processor **1110** may be similar to the settings of the quantum processor **1100** illustrated in **Fig. 11A**. The characterization method applied to the quantum processor **1110** may be similar to the method applied to the quantum processor **1100**. A difference between the characterization method applied to the quantum processor **1100,** and the characterization method applied to the quantum processor **1110,** may be that the method may be applied to select qubits of the quantum processor **1110**. The select qubits may form a one-dimensional chain.

The plurality of qubits may be partitioned into 2 qubit-sets. The qubit-sets may be numbered from 1 to 2. Each qubit-subset (graph edges) is labeled according to the qubit-set that may include it.

**Fig. 11C** illustrates a quantum processor **1120**. The settings of the quantum processor **1120** may be similar to the settings of the quantum processor **1100** illustrated in **Fig. 10A**. The characterization method applied to the quantum processor **1120** may be similar to the method applied to the quantum processor **1100**. A difference between the characterization method applied to the quantum processor **1100,** and the characterization method applied to the quantum processor **1120,** may be that in the characterization method applied to the quantum processor **1120,** the at least one target error parameter may be Pauli generator terms of an error generator that may act inside each of the qubit-subsets. That is, the at least one target error parameter may be Pauli generator terms of $H_{ce}$ or $L_{dis}$ of each of the qubit-subsets. Another difference is that the method may be applied to select qubits of the quantum processor **1120.** The select qubits may form a one-dimensional chain.

The plurality of (select) qubits may be partitioned into a single qubit-set. Each qubit-subset (graph edges) is labeled by the digit 1.

Generally, characterization sequences that may include twirling sequences, may require that each of the corresponding qubit-subsets may have no common qubit. Crosstalk can be present between each of the corresponding qubit-subsets.

Generally, characterization sequences that may include dynamical decoupling sequences, may require that each of the corresponding qubit-subsets may have no common qubit. For characterization of crosstalk, it may further be required that no crosstalk may be present between each of the corresponding qubit-subsets.

Generally, characterization sequences that may include dynamical decoupling sequences may be applied in parallel to characterization sequences that may include twirling sequences. The partitioning may then include, in at least one qubit-set, qubit-subsets that may have crosstalk between them, and qubit-subsets that may have no crosstalk presenting between them.

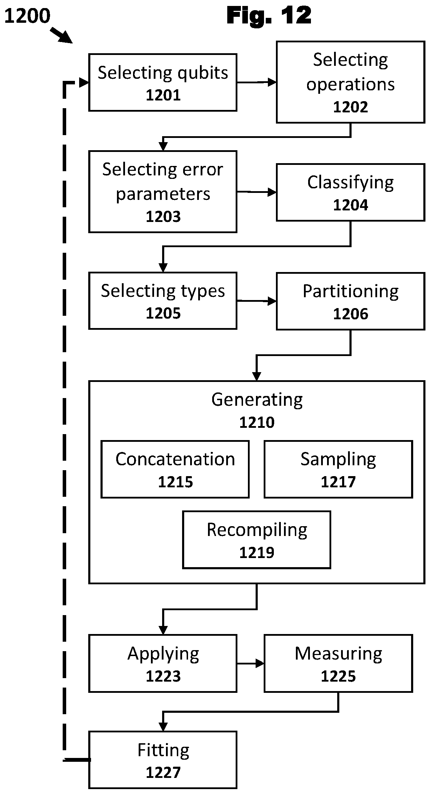

**Fig. 12** illustrates a flowchart diagram of a computer implemented method **1200** for characterizing at least one target error parameter of implementation errors in a quantum logic operation $g$ acting on a targeted set of qubits of a quantum processor, according to embodiments of the present disclosure. The method **1200** may include a step of selecting qubits **1201.** Qubits to which quantum logic operations may be applied, in order to characterize implementation errors, may be selected. The method **1200** may include a step of selecting quantum logic operations **1202.** At least one quantum logic operation, for which at least one target implementation error may be characterized, may be selected. The method **1200** may include a step of selecting at least one target error parameter **1203.** The method **1200** may include a step of classifying the at least one target error parameter **1203.** The at least one target error parameter may be classified according to e.g., coherent/dissipative, over-rotation/not-over-rotation.

The method **1200** may include a step of selecting types of characterization sequences **1206.** A selection may be made, between characterization sequences that may include dynamical decoupling sequences, to characterization sequences that may include twirling sequences. The selection may be performed for each target error parameter included in the at least one target error parameter. The method **1200** may include a step of partitioning the qubits **1206.** The qubits of the quantum processor may be partitioned to qubit-sets that may indicate which target error parameters may be characterized in parallel.

The method **1200** may include a step of generating an at least one characterization sequence **1210.** The step of generating an at least one characterization sequence **1210** may include performing concatenations **1215,** in order to obtain a recursively concatenated germ. The step of generating an at least one characterization sequence **1210** may include randomly sampling quantum operations **1217.** For example, randomly sampling refocusing sequences and/or randomly sampling Pauli operators. Randomly sampling quantum operations **1217** may be performed in order to obtain twirling sequences. The step of generating an at least one characterization sequence **1210** may include recompiling the at least one characterization sequence **1219.**

The method **1200** may include a step of applying the at least one characterization sequence **1223.** The method **1200** may include a step of measuring the qubits **1225.** The at least one characterization sequence may be applied to the qubits of the quantum processing unit, and a state of the qubits may be measured using a measurement apparatus of the quantum processor. The steps of applying the at least one characterization sequence **1223** measuring the qubits **1225** may be repeated in order to collect a set of measurement values.

The method **1200** may include a step of fitting the measurement results to a model **1227.** A value of the at least one target error parameter may be computed by fitting a model to the set of measurement values.

In some embodiments, the method **1200** may be repeated (represented by a dashed line). The method **1200** may be repeated one or more times. The method **1200** may be repeated, for example, with a selection of other qubits, other quantum logic operations, other target error parameters, and different characterization sequences.

In some embodiments, the method **1200** may include updating a sequence-library. A characterization sequence, that may be generated at the step of generating an at least one characterization sequence **1210,** may be added to a collection of characterization sequences. The collection of characterization sequences may be referred to as a "sequence-library". Having a sequence-library may benefit the method **1200** by reducing a running time of the method **1200.** Some of the characterization sequences, that the method **1200** may use, may be provided by the sequence-library, thereby avoiding unnecessary regeneration of characterization sequences.

It is noted that methods disclosed herein may be "deferred". That is, referring to **Fig. 2,** the step of generating at least one characterization sequence $S$ **210** may be performed independently of the step of characterizing the at least one

target error parameter $\theta$ **220.** For example, the step of generating at least one characterization sequence *S* **210** may be performed by a vendor of quantum circuits. The vendor may supply the at least one characterization sequence *S* **213** to a user, e.g., as a sequence-library. The user may perform the step of characterizing the at least one target error parameter $\theta$ **220,** using the at least one characterization sequence *S* **213.**

Methods disclosed herein may be used for calibrating quantum operations. An at least one characterization value of the quantum logic operation *g* may be obtained. The at least one characterization value may be obtained by characterizing the quantum logic operation *g* using a method disclosed herein. The at least one characterization value may not necessarily be an error parameter of the quantum logic operation *g*. For example, the at least one characterization value may be an angle of rotation or a coefficient of a KAK decomposition.

The quantum logic operation *g* may be configured for performing a predefined action on the targeted set of qubits. Configuring the quantum logic operation *g* may be performed by adjusting at least one pulse parameter of the quantum logic operation *g,* according to the at least one characterization value. For example, a pulse duration of an RF signal, that may be applied to a qubit, may be shortened or lengthened. The pulse duration may be set according to a difference between an angle of rotation that may be a characterization value, and a predefined angle of rotation that may be desired. Other examples for pulse parameters may include a pulse shape, a pulse amplitude, and a frequency spectrum.

Configuring the quantum logic operation *g* may be in order to correct implementation errors. In other words, configuring the quantum logic operation *g* may include correcting at least one implementation error in said quantum logic operation *g*.

It is noted that calibration may not necessarily be correction of errors. In some embodiments, a new quantum operation may be obtained by calibrating an available quantum operation. For example, a $\pi/2$-rotation gate may be characterized. A pulse parameter may be adjusted to a desired so as to obtain a $\pi/4$-rotation gate.

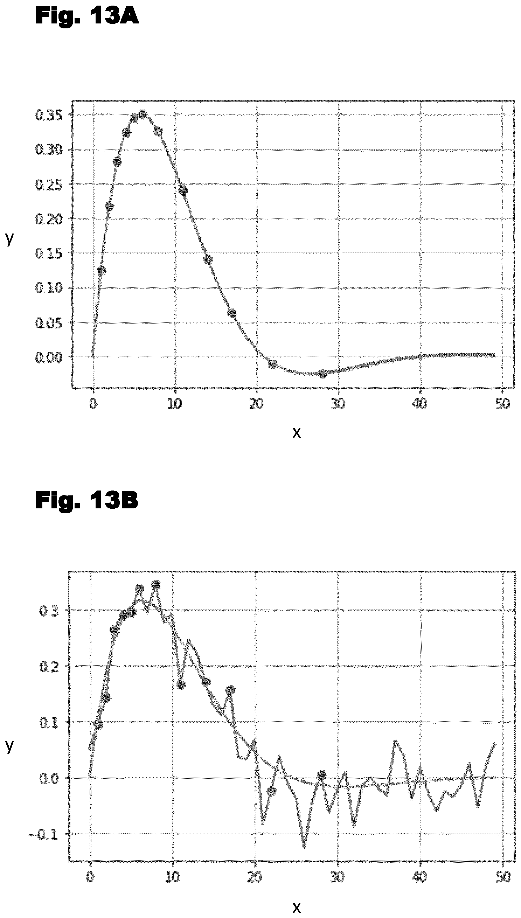

**Fig. 13A-13B** show graphs illustrating model-fitting in a method according to embodiments of the present disclosure.

A method according to the present disclosure, was simulated on a classical computer. A simulated quantum processor has two qubits. A two-qubit gate $e^{-\frac{i}{2}\alpha\sigma_{ZX}}$, where $\alpha = \pi/6$, was characterized. The target error parameter was a Pauli generator term $P_t = \sigma_{ZY}$, having a coefficient $c_{ZY}$. The Pauli generator term $P_t$ is distinct from over-rotation.

The refocusing sequences were dynamical decoupling sequences. The refocusing sequences were $A = \sigma_{XX}$, $B = \sigma_{ZI}$, $C = \sigma_{IY}$. It is noted that these dynamical decoupling sequences can attenuate (reduce) crosstalk.

A recursively concatenated germ was built using the dynamical decoupling sequences. The number of concatenations was *n* = 3. The recursively concatenated germ and the subsequences are $G_1 = gAgA$, $G_2 = G_1AG_1A$, $G_3 = G_2BG_2C$.

Fiducial operations were included in the characterization sequences. The preparation Pauli state was $P_p = \sigma_{XZ}$, the measurement Pauli was $P_m = \sigma_{ZZ}$. Accordingly, a state preparation fiducial operation was $F_p = Y_{\pi/2} \otimes I$, and a measurement fiducial operation was $F_m = X_{\pi/2} \otimes X_{\pi/2}$.

The characterization sequences were $$S(N) = F_p G_3^N F_m$$, where *N* denotes the number of germs included in a characterization sequence. The number of germs used were *N* = 1 ... 6,8,11,14,17,22,29.

The characterization sequences were applied to the quantum processor, and the qubits were measured. The measured value was fitted to a function $f(N) = e^{-\gamma N} e^{-\tau N2} \sin(\theta N)$. The parameters $\theta, \gamma, \tau$ relate to coherent implementation errors, Markovian dissipation implementation errors, and non-Markovian dissipation implementation errors, respectively.

The target error parameter was then computed by $c_{ZY} = \theta/(2N_g sinc(\alpha))$, where $(2sinc(\alpha))$ is the transfer function. $N_g$ denotes the number of instances of the quantum logic operation *g* in the recursively concatenated germ. For $G_3$ in the simulation, $N_g = 8$.

**Fig. 13A** shows the model-fitting without statistical errors. That is, in the limit of applying each characterization sequence infinite times. **Fig. 13B** shows the model-fitting with statistical errors, where each characterization sequence was applied 500 times. In both figures, the *x* axis corresponds the number of germs included in a characterization sequence. The *y* axis corresponds the average measurement result $\langle\sigma_{ZZ}\rangle$.

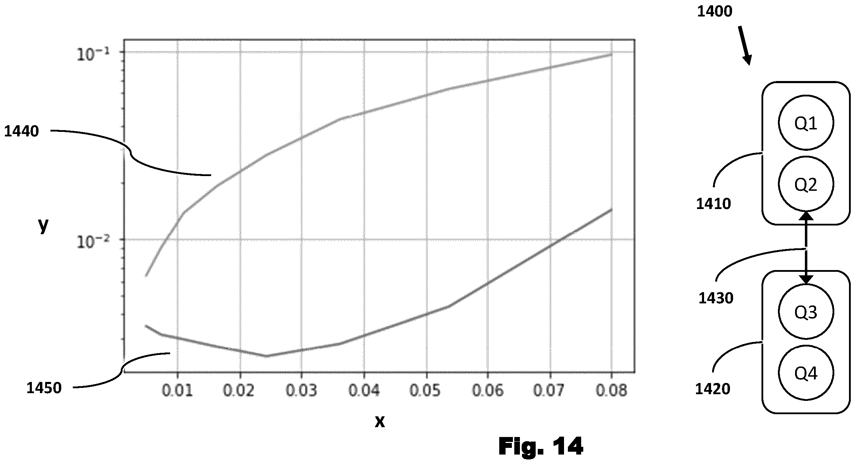

**Fig. 14** show graphs demonstrating the performance of a method for characterizing errors in a quantum processor, according to the present disclosure, in comparison to methods for characterizing errors in a quantum processor, known in the art.

A method according to the present disclosure, and a method known in the art, were simulated on a classical computer. A simulated quantum processor **1400** has four qubits **Q1** to **Q4.** Qubits **Q2** and **Q3** may have crosstalk **1430.** Qubits **Q1 Q2** form a first qubit-subset **1410.** Qubits **Q3 Q4** form a second qubit-subset **1420.** The same quantum logic operation and the same noise model were used for both the method according to the present disclosure, and the method known in the art.

On each qubit-subset **1410 1420,** a gate $e^{-\frac{i}{2}\alpha\sigma_{ZX}}$ gate was characterized. The noise model excludes dissipative noise. Each point in the graphs was obtained by averaging 10 different values of $\alpha \in [0, \pi/2]$ each having 20 different realizations (200 realizations in total). Both characterization protocols use 10 points for fitting. That is, that are 10 points of amplification lengths $l = 1$ to $l = 10$, each with 1000 shots.

The *x* axis shows the standard deviation of the random Pauli parameters of the simulated layer (standard deviation of the crosstalk values). The *y* axis shows the averaged absolute error in estimation of the $\sigma_{ZY}$ term. Graph **1440** represents the method known in the art. Graph **1450** represents the method according to the present disclosure.

Graph **1450** shows a lower error in estimating the $\sigma_{ZY}$ term, in comparison to graph **1440.** The method according to the present disclosure is crosstalk-aware, namely, it accounts for, and thus compensates for (eliminates) the first order contribution of the crosstalk. When crosstalk does not exist, both characterization protocols may have the same error shown in graph **1450.**

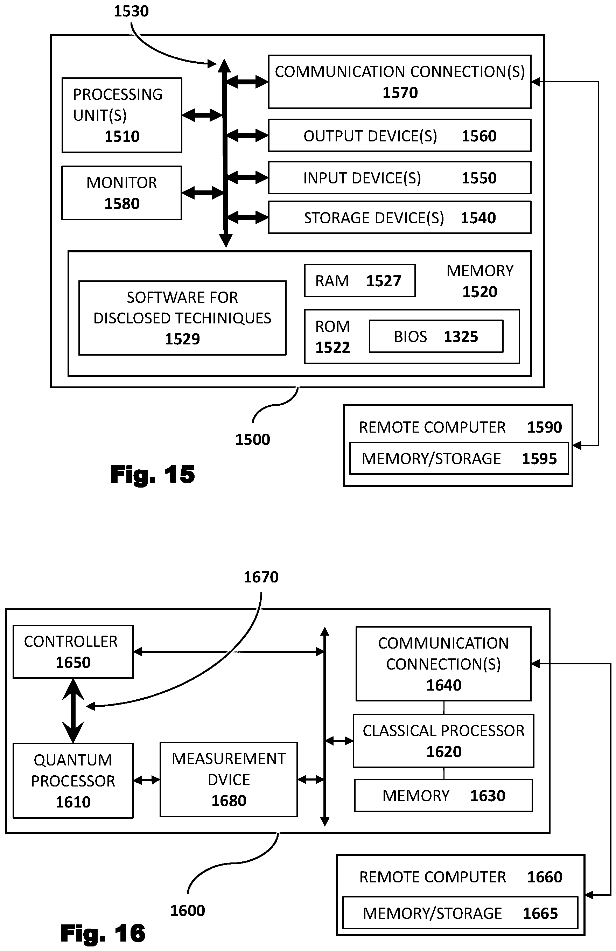

**Fig. 15** and the following discussion are intended to provide a brief, general description of an exemplary computing environment in which the disclosed technology may be implemented. Although not required, the disclosed technology is described in the general context of computer executable instructions, such as program modules, being executed by a personal computer (PC). Generally, program modules include routines, programs, objects, components, data structures, etc., that perform particular tasks or implement particular abstract data types. Moreover, the disclosed technology may be implemented with other computer system configurations, including handheld devices, multiprocessor systems, microprocessor-based or programmable consumer electronics, network PCs, minicomputers, mainframe computers, and the like. The disclosed technology may also be practiced in distributed computing environments where tasks are performed by remote processing devices that are linked through a communications network. In a distributed computing environment, program modules may be located in both local and remote memory storage devices.

With reference to **Fig. 15,** an exemplary system for implementing the disclosed technology includes a general purpose (classical) computing device in the form of an exemplary conventional PC **1500,** including one or more processing units **1510,** a system memory **1520,** and a system bus **1530** that couples various system components including the system memory **1520** to the one or more processing units **1510.** The system bus **1530** may be any of several types of bus structures including a memory bus or memory controller, a peripheral bus, and/or a local bus using any of a variety of bus architectures. The exemplary system memory **1520** includes read only memory (ROM) **1522** and random-access memory (RAM) **1527.** A basic input/output system (BIOS) **1525,** containing the basic routines that help with the transfer of information between elements within the PC **1500,** is stored in ROM **1522.** As shown in **Fig. 15,** the system memory **1520** may store computer-executable instructions for performing any of the disclosed techniques (e.g., sending instructions to quantum computer for applying characterization gate sequences and neighboring gate sequences to a subset of qubits, measuring outcomes, collecting frequencies, computing model parameters) in respective memory portions (shown generally as executable software **1529** for performing any embodiment of the disclosed synthesis techniques).

The exemplary PC **1500** further includes one or more storage devices **1540,** such as a hard disk drive for reading from and writing to a hard disk, a magnetic disk drive for reading from or writing to a removable magnetic disk, and/or an optical disk drive for reading from or writing to a removable optical disk (such as a CD-ROM or other optical media). Such storage devices can be connected to the system bus **1530** by a hard disk drive interface, a magnetic disk drive interface, and/or an optical drive interface, respectively. The drives and their associated computer readable media provide nonvolatile storage of computer-readable instructions, data structures, program modules, and other data for the PC **1500.** Other types of computer-readable media which can store data that is accessible by a PC, such as magnetic cassettes, flash memory, digital video disks, CDs, DVDs, RAMs, NVRAMs, ROMs, and the like, may also be used in the exemplary operating environment. As used herein, the terms storage, memory, and computer-readable media may not include or encompass propagating carrier waves or signals per se.

A number of program modules may be stored in the storage devices **1540,** including an operating system, one or more application programs, other program modules, and program data. Storage of results of quantum measurements and instructions for obtaining such measurements (and/or instructions for performing any embodiment of the disclosed technology) can be stored in the storage devices **1540.** A user may enter commands and information into the PC **1500** through one or more input devices **1550** such as a keyboard and a pointing device such as a mouse. Other input devices may include a digital camera, microphone, joystick, game pad, satellite dish, scanner, or the like. These and other input devices are often connected to the one or more processing units **1510** through a serial port interface that is coupled to the system bus **1530,** but may be connected by other interfaces such as a parallel port, game port, or universal serial bus (USB). A monitor **1580** or other type of display device is also connected to the system bus **1530** via an interface, such as a video adapter. Other peripheral output devices **1560,** such as speakers and printers (not shown), may be included. In some cases, a user interface is displayed so that a user can input a circuit for synthesis, and verify successful synthesis.

The PC **1500** may operate in a networked environment using logical connections to one or more remote computers, such as a remote computer **1590.** In some examples, one or more network or communication connections **1570** are included. The remote computer **1590** may be another PC, a server, a router, a network PC, or a peer device or other common network node, and typically includes many or all of the elements described above relative to the PC **1500,** although only a memory storage device **1595** has been illustrated in **Fig. 15.** The personal computer **1500** and/or the remote computer **1590** can be connected to a local area network (LAN) and a wide area network (WAN). Such networking environments are commonplace in offices, enterprise-wide computer networks, intranets, and the Internet.

When used in a LAN networking environment, the PC **1500** is connected to the LAN through a network interface. When used in a WAN networking environment, the PC **1500** typically includes a modem or other means for establishing communications over the WAN, such as the Internet. In a networked environment, program modules depicted relative to the personal computer **1500,** or portions thereof, may be stored in the remote memory storage device or other locations on the LAN or WAN. The network connections shown are exemplary, and other means of establishing a communications link between the computers may be used.

With reference to **Fig. 16,** an exemplary system for implementing the disclosed technology includes computing environment **1600,** The environment includes one or more quantum processing unit(s) **1610** including one or more monitoring/measuring device(s). The quantum processing unit(s) execute quantum circuits that are provided by a classical processing unit **1620.** The quantum circuits are downloaded into or used to program or configure the quantum processing unit(s) **1610** (e.g., via control lines (quantum bus) **1670**). Procedures according to any of the disclosed embodiments (e.g., a high-level description of the set of quantum circuits to be applied to a qubit patch and neighboring qubits) may be stored in a memory **1630.**

With reference to **Fig. 16,** the high-level description of a quantum software may be translated into quantum circuits (e.g., sequences of quantum gates, or layers of gates acting in parallel on different qubits). Such high-level descriptions may be stored, as the case may be, on one or more external computers **1660** outside the computing environment **1600** utilizing one or more memory and/or storage device(s) **1665,** then downloaded as necessary into the computing environment **1600** via one or more communication connection(s) **1640.** Quantum circuits (according to any of the disclosed embodiments) are coupled to the quantum processor **1610.**

The quantum processing unit(s) can be one or more of, but are not limited to: (a) a superconducting quantum computer; (b) an ion trap quantum computer; (c) a topological quantum computer using e.g., Majorana zero modes; (d) a photonic quantum computer; or (e) a neutral atom quantum computer. The sets of gates (e.g., using any of the disclosed embodiments) can be sent into (or otherwise applied to) the quantum processing unit(s) via control lines **1670** at a controller **1650.** In the illustrated example, the desired quantum computing process is implemented with the aid of one or more controllers **1650** that are specially adapted to control a corresponding one of the quantum processor(s) **1610.** The classical processor **1620** can further interact with measuring/monitoring devices (e.g., readout devices) **1680** to help control and implement the desired quantum computing process (e.g., by reading or measuring out data results from the quantum processing units once available, etc.).

Therefore, casting into a language of clauses, the present disclosure provides methods and systems according to, but not limited to, the following clauses:

**Clause 1:** A computer implemented method for characterizing at least one target error parameter of implementation errors in a quantum logic operation $g$ acting on a targeted set of qubits of a quantum processor, the method comprising:

**(a)** generating at least one characterization sequence $S$ configured for amplifying said at least one target error parameter, said at least one characterization sequence $S$ comprises at least one refocusing sequence, wherein the at least one refocusing sequence is configured so that the characterization sequence reduces predefined generator terms including crosstalk between said targeted set of qubits and another set of qubits of the quantum processor;

**(b)** characterizing said at least one target error parameter using said at least one characterization sequence in a characterization protocol.

**Clause 2:** As recited in clause 1, wherein characterizing the at least one target error parameter comprises:

**(a)** applying the at least one characterization sequence $S$ to the quantum processor;
**(b)** measuring the targeted set of qubits using a measurement apparatus of said quantum processor, thereby obtaining a set of measurement values;
**(c)** computing a value of said at least one target error parameter, by fitting a model to said set of measurement values.

**Clause 3:** As recited in any one of clauses 1 to 2, wherein said at least one characterization sequence $S$ is configured for reducing predefined coherent error generator terms in said targeted set of qubits.
**Clause 4:** As recited in any one of clauses 1 to 3, wherein said at least one refocusing sequence is a dynamical decoupling sequence.

**Clause 5:** As recited in any one of clauses 1 to 3, wherein said at least one refocusing sequence is a twirling sequence.

**Clause 6:** As recited in any one of clauses 1 to 5, wherein said at least one target error parameter is a Pauli generator term $P_t$.

**Clause 7:** As recited in clause 6, wherein said at least one characterization sequence $S$ is configured to eliminate predefined Pauli generator terms of said implementation errors distinct from the at least one target error parameter.

**Clause 8:** As recited in any one of the preceding clauses, wherein said method characterizes a single target error parameter of implementation errors in the quantum logic operation $g$.

**Clause 9:** As recited in any one of the preceding clauses, wherein said at least one characterization sequence $S$ is configured to reduce a magnitude measure of said crosstalk.

**Clause 10:** As recited in any one of the preceding clauses, wherein said at least one characterization sequence $S$ is configured to eliminate at least a first-order error of implementation errors distinct from the at least one target error parameter.

**Clause 11:** As recited in any one of the preceding clauses, wherein said at least one characterization sequence $S$ is configured for characterizing dissipation implementation errors, said dissipation implementation errors being any one of Markovian dissipation implementation errors, and non-Markovian dissipation implementation errors.

**Clause 12:** As recited in any one of the preceding clauses, comprising recompiling said at least one characterization sequence $S$.

**Clause 13:** As recited in any one of the preceding clauses, wherein said at least one characterization sequence $S$ comprises at least one germ.

**Clause 14:** As recited in clause 13, wherein said at least one germ is a recursively concatenated germ.

**Clause 15:** As recited in any one of the preceding clauses, wherein the at least one refocusing sequences includes a set of refocusing sequences and said at least one characterization sequence $S$ includes a recursively concatenated germ obtained by computing a predefined number $n$ of concatenations $G_{k+1} = \prod_m G_k \beta_m^{(k)}$, wherein $k = 0, 1, \ldots, n-1$, wherein, $\beta_m^{(k)}$ are refocusing sequences of said set of refocusing sequences and $G_0 = g$, $g$ being said quantum logic operation.

**Clause 16:** As recited in any one of the preceding clauses, wherein said at least one characterization sequence $S$ comprises at least one fiducial operation.

**Clause 17:** As recited in clause 16 as dependent on clause 3, wherein:

(a) said at least one fiducial operation comprises state preparation operations configured for setting a state of said set of qubits to a preparation Pauli state $P_p$;
(b) said at least one fiducial operation comprises measuring said set of qubits according to a measurement Pauli $P_m$.

**Clause 18:** As recited in clause 17, wherein said preparation Pauli state $P_p$, measurement Pauli $P_m$, and said Pauli generator term $P_t$ span an algebra isomorphic to the $SU(2)$ Lie algebra.

**Clause 19:** As recited in any one of clauses 17 to 18, wherein said preparation Pauli state $P_p$ and measurement Pauli $P_m$ are configured for increasing a sensitivity of said least one characterization sequence $S$ to said at least one error parameter.

**Clause 20:** As recited in any one of clauses 16 to 19, wherein said at least one fiducial operation comprises a gate layer.

**Clause 21:** As recited in any one of clauses 6 to 20, wherein said at least one refocusing sequence commutes with said Pauli generator term $P_t$.

**Clause 22:** As recited in any one of the preceding clauses, wherein said quantum logic operation $g$ is a single-qubit operation; or wherein said quantum logic operation $g$ is a two-qubit operation, and wherein a KAK decomposition of the quantum logic operation $g$ comprises any of one generator, two generators, and three generators.

**Clause 23:** As recited in any one of the preceding clauses, wherein said quantum logic operation $g$ is a two-qubit operation, and wherein:

(a) said Pauli generator term $P_t$ anti-commutes with at least one generator of a KAK decomposition of an ideal version of said quantum logic operation $g$;

(b) a sum of coefficients is greater than $\frac{3\pi}{4}$, said coefficients corresponding to said at least one KAK generator anti-commuting with said Pauli generator term $P_t$; and

**(c)** said at least one refocusing sequence comprises at least one secondary refocusing sequence, said at least one secondary refocusing sequence commuting with all commutators of said Pauli generator term $P_t$ and generators of said KAK decomposition of an ideal version of said quantum logic operation $g$.

**Clause 24:** As recited in any one of clauses 14 to 23, wherein said Pauli generator term $P_t$ is distinct from an over-rotation term and said recursively concatenated germ comprises at least $n$ concatenation steps, and wherein said at least one characterization sequence $S$ is configured to eliminate a fraction of $1 - 2^{-n}$ of Pauli generator terms of said implementation errors.

**Clause 25:** As recited in any one of clauses 14 to 24, wherein said Pauli generator term $P_t$ is distinct from an over-rotation term and a primary refocusing sequence anti-commutes with a corresponding Pauli generator term of an ideal version of said quantum logic operation $g$.

**Clause 26:** As recited in any one of clauses 14 to 22, wherein said Pauli generator term $P_t$ is an over-rotation term and said recursively concatenated germ comprises at least $n$ concatenation steps, and wherein said at least one characterization sequence S is configured to eliminate a fraction of $1 - 2^{-(n+1)}$ of Pauli generator terms of said implementation errors.

**Clause 27:** As recited in any one of clauses 24 or 26, wherein said at least one characterization sequence $S$ is configured to isolate said Pauli generator term $P_t$ of said implementation errors.

**Clause 28:** As recited in any one of clauses 26 to 27, wherein said at least one characterization sequence $S$ comprises any of the germs $G_0^{(1)} = gA$, and $G_1^{(1)} = BG_0^{(1)}CG_0^{(1)}$, wherein said $A, B, C$ being refocusing sequences.

**Clause 29:** As recited in any one of clauses 26 to 28, wherein said at least one characterization sequence $S$ comprises any of the germs $G_0^{(2)} = gAgA$, and $G_1^{(2)} = BG_0^{(2)}CG_0^{(2)}$, wherein said $A, B, C$ being refocusing sequences.

**Clause 30:** As recited in any one of clauses 24 to 25, or clause 27, wherein said at least one characterization sequence $S$ comprises any of the germs $G_0^{(3)} = gAgA,\ G_1^{(3)} = G_0^{(3)}AG_0^{(3)}A,\ G_2^{(3)} = BG_1^{(3)}CG_1^{(3)}$, and $G_3^{(3)} = G_1^{(3)}BG_1^{(3)}C$, wherein said $A, B, C$ being refocusing sequences.

**Clause 31:** As recited in any one of the preceding clauses, wherein said at least one characterization sequence $S$ comprises refocusing sequences randomly sampled for each application of the at least one characterization sequence $S$.

**Clause 32:** As recited in any one of clauses 3 to 25, or clause 31, wherein said Pauli generator term $P_t$ is distinct from an over-rotation term, wherein said at least one characterization sequence $S$ comprises at least one subsequence $G^{(4)} = PgDgDP$, wherein:

**(a)** said P being a randomly sampled Pauli operator; and
**(b)** said D being a refocusing sequence commuting with said Pauli generator term $P_t$, and anti-commuting with a corresponding Pauli generator term of an ideal version of said quantum logic operation $g$.

**Clause 33:** As recited in any one of clauses 3 to 23, or any one of clauses 26 to 29, wherein said Pauli generator term $P_t$ is an over-rotation term, wherein said at least one characterization sequence $S$ comprises at least one subsequence $G^{(5)} = PgP$, wherein said $P$ being a randomly sampled Pauli operator commuting with said Pauli generator term $P_t$.

**Clause 34:** As recited in any one of the preceding clauses, applied to at least two quantum logic operations in parallel.

**Clause 35:** As recited in clause 34, wherein said at least two quantum logic operations operate on corresponding subsets of qubits, each of said corresponding subsets of qubits having no common qubit.

**Clause 36:** As recited in clause 35, wherein no crosstalk is present between each of said corresponding subsets of qubits.

**Clause 37:** As recited in any one of clauses 35 to 36, wherein each of said corresponding subsets of qubits is included in a corresponding hyperedge of an interaction hypergraph, wherein each of said corresponding hyperedges being unique for each of said corresponding subsets of qubits.

**Clause 38:** As recited in any one of clauses 34 to 37, wherein said quantum logic operation $g$ is a gate layer or said at least one refocusing sequence comprises a gate layer. **Clause 39:** A method for characterizing a quantum processor including a plurality of quantum logic operations, the method comprising applying a method according to any one of clauses 1 to 38 to at least one quantum logic operation included in the plurality of quantum logic operations of the quantum processor.

**Clause 40:** As recited in clause 39, wherein the quantum processor is described in terms of qudits in place of qubits.

**Clause 41:** A non-transient computer readable storage medium, storing computer instructions, wherein the computer instructions are used for causing a computer to execute the method according to any one of clauses 1 to 40.

**Clause 42:** A computer program product, comprising a computer program, wherein the computer program, when executed by a computer, implements the method according to any one of clauses 1 to 40.

**Clause 43:** A system comprising a computer and a quantum processor, the computer having gate-level or pulse-level access to the quantum processor, the system being configured to perform the method according to any one of clauses 1 to 40.

**Clause 44:** A system for characterizing implementation errors in a quantum logic operation *g* operating on a targeted set of qubits of a quantum processor, comprising a processor configured for executing computer-executable components stored in a memory, wherein the computer-executable components comprise:

(a) a sequence component, configured for generating at least one characterization sequence, said at least one characterization sequence including at least one refocusing sequence and said quantum logic operation *g,* the at least one characterization sequence is configured for amplifying at least one target error parameter, and the at least one refocusing sequence is configured for reducing predefined crosstalk Pauli terms between said targeted set of qubits and another set of qubits of the quantum processor; and

(b) a characterization component, configured for characterizing errors in said quantum logic operation *g,* using said sequence.

**Clause 45:** As recited in clause 44, wherein said at least one characterization sequence is configured for reducing predefined Pauli generator terms in said targeted set of qubits. **Clause 46:** As recited in any one of clauses 44 to 45, wherein said at least one refocusing sequence is a dynamical decoupling sequence.

**Clause 47:** As recited in any one of clauses 44 to 45, wherein said at least one refocusing sequence is a twirling sequence.

**Clause 48:** As recited in any one of clauses 44 to 47, wherein said at least one target error parameter is a Pauli generator term $P_t$.

**Clause 49:** As recited in clause 48, wherein said at least one refocusing sequence commutes with said Pauli generator term $P_t$.

**Clause 50:** As recited in clause 48 or clause 49, wherein a first refocusing sequence included in said at least one characterization sequence anti-commutes with a Pauli generator term of an ideal version of said quantum logic operation *g* corresponding said Pauli generator term $P_t$.

**Clause 51:** As recited in any one of clauses 48 to 50, wherein said at least one refocusing sequence is configured to cut the link between a targeted subset of qubits and its neighbors.

**Clause 52:** A quantum circuit for use in characterizing implementation errors in a quantum logic operation *g* acting on a set of qubits, said quantum circuit comprises the quantum logic operation *g* and at least one refocusing sequence, wherein the quantum circuit is configured for amplifying at least one target error parameter, wherein the at least one refocusing sequence is configured for reducing predefined terms of a crosstalk between said set of qubits and a set of spectator qubits of the quantum processor.

**Clause 53:** As recited in clause 52, wherein said at least one characterization sequence is configured for reducing predefined generator terms in said targeted set of qubits.

**Clause 54:** As recited in any one of clauses 52 to 53, wherein said at least one refocusing sequence is a dynamical decoupling sequence.

**Clause 55:** As recited in any one of clauses 52 to 53, wherein said at least one refocusing sequence is a twirling sequence.

**Clause 56:** As recited in any one of clauses 52 to 55, wherein said at least one target error parameter is a Pauli generator term $P_t$.

**Clause 57:** As recited in clause 56, wherein said Pauli generator term $P_t$ is not an over-rotation Pauli generator term, the quantum circuit comprises any of the germs $G_0^{(1)} =$ *gAgA,*

$$G_1^{(1)} = G_0^{(1)} A G_0^{(1)} A, \ G_2^{(1)} = B G_1^{(1)} C G_1^{(1)}$$, and $$G_3^{(1)} = G_1^{(1)} B G_1^{(1)} C$$, wherein said *A, B, C* being refocusing sequences.

**Clause 58:** As recited in clause 56, wherein said Pauli generator term $P_t$ is an over-rotation Pauli generator term, the quantum circuit comprises any of the germs $G_0^{(2)} = gA$,

$$G_1^{(2)} = gAgA, \quad G_2^{(2)} = BG_1^{(2)}CG_1^{(2)}, \quad G_3^{(2)} = BG_1^{(2)}CG_1^{(2)}$$ wherein said $A,B,C$ being refocusing sequences.

**Clause 59:** As recited in any one of clauses 56 to 58, comprising at least one recursively concatenated germ.

**Clause 60:** As recited in clause 59, wherein the at least one refocusing sequences includes a set of refocusing sequences, wherein said recursively concatenated germ is defined by a predefined number $n$ of concatenations

$$G_{k+1} = \prod_m G_k \beta_m^{(k)}$$ , wherein $k = 0,1, \ldots , n - 1$, wherein $G_0 = g$, wherein $\beta_m^{(k)}$ are refocusing sequences included in said set of refocusing sequences.

**Clause 61:** As recited in clause 56, wherein said Pauli generator term $P_t$ is not an over-rotation Pauli generator term, the quantum circuit comprises at least one subsequence $G^{(3)} = PgDgDP$, wherein:

(a) said $P$ being a randomly sampled Pauli operator commuting with said Pauli term $P_t$; and
(b) said $D$ being a refocusing sequence commuting with said Pauli generator term $P_t$, and anti-commuting with a corresponding Pauli generator term of an ideal version of said quantum logic operation $g$.

**Clause 62:** As recited in clause 56, wherein said Pauli generator term $P_t$ is an over-rotation Pauli generator term, the quantum circuit comprises at least one subsequence $G^{(4)} = PgP$, wherein said $P$ being a randomly sampled Pauli operator commuting with said Pauli term $P_t$.

**Clause 63:** A computer implemented method for calibrating a quantum logic operation $g$ acting on a targeted set of qubits of a quantum processor, the method comprising:

(a) obtaining at least one characterization value of said quantum logic operation $g$ by characterizing said quantum logic operation $g$ using a method according to any one of clauses 1 to 38;
(b) configuring said quantum logic operation $g$ for performing a predefined action on said targeted set of qubits, by adjusting at least one pulse parameter of said quantum logic operation $g$, according to said at least one characterization value.

**Clause 64:** As recited in clause 63, wherein adjusting at least one pulse parameter comprises adjusting at least one of a pulse shape, a pulse amplitude, and a frequency spectrum.

**Clause 65:** As recited in any one of clauses 63 to 64, wherein configuring said quantum logic operation $g$ includes correcting at least one implementation error in said quantum logic operation $g$.

**Clause 66:** The method as recited in any one of clauses 31 to 40 as dependent on clause 23, wherein:

(a) said Pauli generator term $P_t$ is distinct from an over-rotation term;
(b) said at least one characterization sequence $S$ comprises at least one subsequence $G^{(6)} = PG^{(n \leq 3)}P$, wherein:

i) said $P$ being a Pauli operator which is randomly sampled from a set of all the Pauli operators commuting with either $P_t$ or the commutator of $P_t$ and the ideal gate's KAK decomposition; and
ii) $G^{(n \leq 3)}$ is any one of: $G^{(0)} = g$, and a subsequence as recited in clauses 28-30.

Having described and illustrated the principles of the disclosed technology with reference to the illustrated embodiments, it will be recognized that the illustrated embodiments can be modified in arrangement and detail without departing from such principles. For instance, elements of the illustrated embodiments shown in software may be implemented in hardware and vice-versa. Also, the technologies from any example can be combined with the technologies described in any one or more of the other examples. It will be appreciated that procedures and functions such as those described with reference to the illustrated examples can be implemented in a single hardware or software module, or separate modules can be provided. The arrangements above are provided for convenient illustration, and other arrangements can be used.

**Claims**

1.  A computer implemented method for characterizing at least one target error parameter of implementation errors in a quantum logic operation *g* acting on a targeted set of qubits of a quantum processor, the method comprising:

> **(a)** generating at least one characterization sequence *S* configured for amplifying said at least one target error parameter, said at least one characterization sequence *S* comprises at least one refocusing sequence, wherein the at least one refocusing sequence is configured so that the characterization sequence reduces predefined generator terms including crosstalk between said targeted set of qubits and another set of qubits of the quantum processor;
> **(b)** characterizing said at least one target error parameter using said at least one characterization sequence in a characterization protocol.

2. The method according to claim 1, wherein:

> **(a)** said at least one characterization sequence *S* is configured for reducing predefined coherent error generator terms in said targeted set of qubits;
> **(b)** the method characterizes a single target error parameter of implementation errors in the quantum logic operation *g*;
> **(c)** said at least one target error parameter is a Pauli generator term $P_t$; said at least one characterization sequence *S* is configured to eliminate predefined Pauli generator terms of said implementation errors distinct from the at least one target error parameter; and
> **(d)** said at least one refocusing sequence commutes with said Pauli generator term *Pt*.

3. The method according to any one of claims 1 to 2, wherein said at least one refocusing sequence is any of: a dynamical decoupling sequence, and a twirling sequence.

4. The method according to any one of the preceding claims, wherein said at least one characterization sequence *S* is configured to any of: reducing a magnitude measure of said crosstalk, and eliminating at least a first-order error of implementation errors distinct from the at least one target error parameter.

5. The method according to any one of the preceding claims, wherein the at least one refocusing sequences includes a set of refocusing sequences, and wherein said at least one characterization sequence S comprises at least one recursively concatenated germ obtained by computing a predefined number *n* of concatenations

$$G_{k+1} = \prod_m G_k \beta_m^{(k)}$$

, wherein *k* = 0,1, ... , n - 1, wherein , $\beta_m^{(k)}$ are refocusing sequences included in said set of refocusing sequences and $G_0$ = *g*, *g* being said quantum logic operation.

6. The method according to any one of claims 2 to 5, wherein said at least one characterization sequence S comprises at least one fiducial operation, and wherein:

> (a) said at least one fiducial operation comprises state preparation operations configured for setting a state of said set of qubits to a preparation Pauli state $P_p$;
> (b) said at least one fiducial operation comprises measuring said set of qubits according to a measurement Pauli $P_m$;
> **(c)** said preparation Pauli state $P_p$ and measurement Pauli $P_m$ are configured for increasing a sensitivity of said least one characterization sequence S to said at least one error parameter; and
> **(d)** said preparation Pauli state $P_p$, measurement Pauli $P_m$, and said Pauli generator term $P_t$, span an algebra isomorphic to the *SU*(2) Lie algebra.

7. The method according to any one of the preceding claims, wherein said quantum logic operation *g* is a two-qubit operation, and wherein:

> **(a)** said Pauli generator term $P_t$ anti-commutes with at least one generator of a KAK decomposition of an ideal version of said quantum logic operation *g*;
> **(b)** a sum of coefficients is greater than $\frac{3\pi}{4}$ , said coefficients corresponding to said at least one KAK generator anti-commuting with said Pauli generator term $P_t$; and
> **(c)** said at least one refocusing sequence comprises at least one secondary refocusing sequence, said at least one secondary refocusing sequence commuting with all commutators of said Pauli generator term $P_t$ and

generators of said KAK decomposition of an ideal version of said quantum logic operation *g*.

8. The method according to any one of claims 5 to 7, wherein any one of the following:

    **(a)** said Pauli generator term $P_t$ is distinct from an over-rotation term and wherein:

        **i)** said recursively concatenated germ comprises at least n concatenation steps;
        **ii)** said Pauli generator term $P_t$ is distinct from an over-rotation term and a primary refocusing sequence anti-commutes with a corresponding Pauli generator term of an ideal version of said quantum logic operation *g*; and
        **iii)** said at least one characterization sequence *S* is configured to eliminate a fraction of $1 - 2^{-n}$ of Pauli generator terms of said implementation errors;

    **(b)** said Pauli generator term $P_t$ is an over-rotation term and said recursively concatenated germ comprises at least *n* concatenation steps, and wherein said at least one characterization sequence *S* is configured to eliminate a fraction of $1 - 2^{-(n+1)}$ of Pauli generator terms of said implementation errors;

    wherein said at least one characterization sequence *S* is preferably configured to isolate said Pauli generator term $P_t$ of said implementation errors.

9. The method according to claim 8, wherein any one of the following:

    **(a)** said Pauli generator term $P_t$ is an over-rotation term, and said at least one characterization sequence S comprises any one of the germs $G_0^{(1)} = gA, G_1^{(1)} = BG_0^{(1)}CG_0^{(1)}$, and $G_0^{(2)} = gAgA$, and $G_1^{(2)} = BG_0^{(2)}CG_0^{(2)}$ wherein said *A, B, C* being refocusing sequences; and
    **(b)** said Pauli generator term $P_t$ is distinct from an over-rotation term, and said at least one characterization sequence S comprises any of the germs $G_0^{(3)} = gAgA$, $G_1^{(3)} = G_0^{(3)}AG_0^{(3)}A$, $G_2^{(3)} = BG_1^{(3)}CG_1^{(3)}$, and $G_3^{(3)} = G_1^{(3)}BG_1^{(3)}C$, wherein said *A, B, C* being refocusing sequences.

10. The method according to any one of claims 2 to 9, wherein any one of the following:

    **(a)** said Pauli generator term $P_t$ is distinct from an over-rotation term, wherein said at least one characterization sequence *S* comprises at least one subsequence $G^{(4)} = PgDgDP$, and wherein:

        **i)** said *P* being a randomly sampled Pauli operator; and
        **ii)** said *D* being a refocusing sequence commuting with said Pauli generator term $P_t$, and anti-commuting with a corresponding Pauli generator term of an ideal version of said quantum logic operation *g*;

    **(b)** said Pauli generator term $P_t$ is an over-rotation term, wherein said at least one characterization sequence *S* comprises at least one subsequence $G^{(5)} = PgP$, wherein said *P* being a randomly sampled Pauli operator commuting with said Pauli generator term $P_t$.

11. The method according to any one of the preceding claims, applied to at least two quantum logic operations in parallel, wherein said at least two quantum logic operations operate on corresponding subsets of qubits, each of said corresponding subsets of qubits having no common qubit.

12. The method according to claim 11, wherein no crosstalk is present between each of said corresponding subsets of qubits.

13. The method according to any one of claims 11 to 12, wherein each of said corresponding subsets of qubits is included in a corresponding hyperedge of an interaction hypergraph, wherein each of said corresponding hyperedges being unique for each of said corresponding subsets of qubits.

14. A non-transient computer readable storage medium, storing computer instructions, wherein the computer instructions are used for causing a computer to execute the method according to any one of claims 1 to 13.

15. A system comprising a computer and a quantum processor, the computer having gate-level or pulse-level access to the quantum processor, the system being configured to perform the method according to any one of claims 1 to 13.

# Fig. 1

$$g : \hat{\rho} \to \hat{\rho} \qquad 140$$
$$g_{ideal} = e^{-i\left(H_{set} \otimes I - I \otimes H_{set}^T\right)} \qquad 145$$

$$g = e^{-i\left((H_{set}+H_{err})\otimes I - I \otimes (H_{set}+H_{err})^T\right)+L_{dis}}$$
$$150$$

$$H_{set} = \frac{1}{2}\sum_{d=1}^{D} a_d P_d$$
$$160$$
$$H_{err} = \frac{\varepsilon}{2}\sum_{d=1}^{D} c_d P_d$$

# Fig. 2

**200**

**215**

**213**

**217**

Generating **210**

$S$

$g$ $R$ $g$ $R$

Characterizing
**220**

$S$

$$\left\| H_{err}^{\theta} \right\|_{eff} > \left\| H_{err}^{\theta} \right\|_{bare} \quad \textbf{223}$$

$$\left\| H_{err}^{Pb} \right\|_{eff} < \left\| H_{err}^{Pb} \right\|_{bare} \quad \textbf{227}$$

$$\theta = P_t \quad \textbf{231}$$

$$\left\| H_{ce}^{Pb} \right\|_{eff} < \left\| H_{ce}^{Pb} \right\|_{bare} \quad \textbf{233}$$

$$\left\| H_{int} \right\|_{eff} < \left\| H_{int} \right\|_{bare} \quad \textbf{235}$$

$$H_{eff} = \varepsilon H_{err,bare}^{\theta} + \sum_{n=2}^{\infty} \varepsilon^n H_n \quad \textbf{237}$$
$$\left\| H_1^{Pb \neq P_t} \right\|_{eff} = 0$$

Applying **243**

Measuring **245**

Fitting **247**

$R$  300

$DD$  310

$Twirl$  320

$[R, P_t] = 0$  330

**Fig. 3A**

**Fig. 3B**

$L_{dis}$  360

370

380

$F_p$  · · ·  · · ·  $F_m$

· · ·  $G$  $G$  · · ·  $G$  · · ·

390

$S$  350

400

$|\psi_0\rangle\!\rangle$ — $F_p$ — $|P_p\rangle\!\rangle$

420

450

$|\psi\rangle\!\rangle$ — $F_m$ —

460

480

$\langle\!\langle\phi|$

470  $\langle\!\langle P_m|$

**Fig. 4**

**Fig. 5**

$$[P_t, P_p] = i2P_m$$
$$[P_p, P_m] = i2P_t$$
$$[P_m, P_t] = i2P_p$$

560

520

$P_t("Y")$

$\langle P_m \rangle$

550

$P_p("X")$

510

$P_m("Z")$

$|\psi\rangle\rangle$

530

540

500

**Fig. 6**

$$g = G_0 \quad \overbrace{G_0\beta_1^{(0)} \, G_0\beta_2^{(0)} \cdots G_0\beta_{m_1}^{(0)}} \quad 615$$

610

$$\underbrace{G_1} \quad 620$$

$$\overbrace{G_1\beta_1^{(1)} \, G_1\beta_2^{(1)} \cdots G_1\beta_{m_2}^{(1)}} \quad 625$$

$$\underbrace{G_2} \quad 630$$

$$\cdots$$

635

$$\overbrace{G_{n-1}\beta_1^{(n-1)} \, G_{n-1}\beta_2^{(n-1)} \cdots G_0\beta_{m_n}^{(n-1)}}$$

$$\underbrace{G_n} \quad 600$$

**Fig. 7**

n concat.
**700**

$\mathcal{P}_t$ Over-rotation
**710**

$\mathcal{P}_t$ not over-rotation
**730**

$$\frac{N(c_d = 0)}{D} = 1 - 2^{-(n+1)}$$

**720**

$$\frac{N(c_d = 0)}{D} = 1 - 2^{-n}$$

**740**

$$\left\{R_{prim}, H_{set}^{P_t}\right\} = 0$$

**750**

**Fig. 8**

Over-rotation
**810**

$$G^{(5)} = PgP$$

**815**

$P_t$

Not
over-rotation
**820**

$$G^{(4)} = PgDgDP$$

**825**

**800**

**841** $P \in \mathcal{P}$

**842** $[P, P_t] = 0$

**843** $D \in \{R\}$

**845** $[D, P_t] = 0$

**847** $\left\{D, H_{set}^{P_t}\right\} = 0$

**Fig. 9**

$$e^{-i\frac{1}{2}\vec{k}\cdot\vec{\Sigma}} = e^{-i\frac{1}{2}\left(k_x\sigma_{XX}+k_y\sigma_{YY}+k_z\sigma_{ZZ}\right)} \quad 940$$

$$\sum_{\substack{k_i, \\ \{\sigma_{ii},P_t\}=0}} k_i > \frac{3\pi}{4} \quad 960$$

$$\{\sigma_{XX}, P_t\} = 0$$
$$\{\sigma_{YY}, P_t\} = 0 \quad \text{OR}$$
$$\{\sigma_{ZZ}, P_t\} = 0 \quad \text{OR} \quad 950$$

$$\left[R_{sec}, [\sigma_{XX}, P_t]\right] = 0$$
$$\left[R_{sec}, [\sigma_{YY}, P_t]\right] = 0 \quad \text{AND}$$
$$\left[R_{sec}, [\sigma_{ZZ}, P_t]\right] = 0 \quad \text{AND} \quad 970$$

KAK of $g_{ideal}$

Fig. 10A

1000

1005

Fig. 10B

1010

Fig. 10C

1020

Fig. 11A

1100

1105

Fig. 11B

1110

Fig. 11C

1120

**1200**

## Fig. 12

```
Selecting qubits          Selecting
1201                      operations
                          1202

Selecting error           Classifying
parameters                1204
1203

Selecting types           Partitioning
1205                      1206

                Generating
                1210

    Concatenation          Sampling
    1215                   1217

            Recompiling
            1219

Applying                  Measuring
1223                      1225

Fitting
1227
```

**Fig. 13A**

**Fig. 13B**

**Fig. 14**

EP 4 553 720 A1

**Fig. 15**

**Fig. 16**

Europäisches
Patentamt
European
Patent Office
Office européen
des brevets

**EUROPEAN SEARCH REPORT**

**Application Number**

EP 24 20 3008

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MUNDADA PRANAV S. ET AL: "Experimental Benchmarking of an Automated Deterministic Error-Suppression Workflow for Quantum Algorithms", PHYSICAL REVIEW APPLIED, [Online] vol. 20, no. 2, 3 May 2023 (2023-05-03), XP093251310, US ISSN: 2331-7019, DOI: 10.1103/PhysRevApplied.20.024034 Retrieved from the Internet: URL:https://arxiv.org/pdf/2209.06864> [retrieved on 2025-02-17] * abstract * * page 1 - page 18 * | 1-15 | INV. G06N10/70 |
| A | CLEMENT CHARLES ET AL: "Simulating Z_2 lattice gauge theory on a quantum computer", ARXIV.ORG, CORNELL UNIVERSITY LIBRARY, 201 OLIN LIBRARY CORNELL UNIVERSITY ITHACA, NY 14853, [Online] 27 October 2023 (2023-10-27), XP091646040, [retrieved on 2025-02-17] * the whole document * | 1-15 | |
| | | | TECHNICAL FIELDS SEARCHED (IPC) |
| | | | G06N |
| A | ROLAND C FARRELL ET AL: "Scalable Circuits for Preparing Ground States on Digital Quantum Computers: The Schwinger Model Vacuum on 100 Qubits", ARXIV.ORG, CORNELL UNIVERSITY LIBRARY, 201 OLIN LIBRARY CORNELL UNIVERSITY ITHACA, NY 14853, [Online] 8 August 2023 (2023-08-08), XP091589695, [retrieved on 2025-02-17] * the whole document * | 1-15 | |

-/--

The present search report has been drawn up for all claims

| Place of search | Date of completion of the search | Examiner |
|---|---|---|
| The Hague | 17 February 2025 | Tsakonas, Athanasios |

EPO FORM 1503 03.82 (P04C01)

Europäisches
Patentamt

European
Patent Office

Office européen
des brevets

# EUROPEAN SEARCH REPORT

**Application Number**

EP 24 20 3008

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RYAN LAROSE ET AL: "Mitiq: A software package for error mitigation on noisy quantum computers", ARXIV.ORG, CORNELL UNIVERSITY LIBRARY, 201 OLIN LIBRARY CORNELL UNIVERSITY ITHACA, NY 14853, [Online] 1 August 2022 (2022-08-01), XP091284896, [retrieved on 2025-02-17] * the whole document * | 1-15 | |

**TECHNICAL FIELDS SEARCHED (IPC)**

The present search report has been drawn up for all claims

| Place of search | Date of completion of the search | Examiner |
|---|---|---|
| The Hague | 17 February 2025 | Tsakonas, Athanasios |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.........................................................................................
& : member of the same patent family, corresponding
   document

EPO FORM 1503 03.82 (P04C01)